# EUROPEAN PATENT SPECIFICATION

(11) **EP 1 421 489 B1**
(45) Date of publication and mention of the grant of the patent: **20.10.2010**
(21) Application number: 02760955.1
(22) Date of filing: 16.08.2002
(51) Int. Cl.: G06F 9/46, G06F 13/00, H04L 12/66, H04M 3/42

(54) **DISTRIBUTION OF CONNECTION HANDLING IN A PROCESSOR CLUSTER**
VERTEILUNG DER VERBINDUNGSABWICKLUNG IN EINEM PROZESSORCLUSTER
REPARTITION DE LA GESTION DES CONNEXIONS DANS UN GROUPE DE PROCESSEURS

(30) Priority: 24.08.2001 US 935759
(43) Date of publication of application: 26.05.2004
(73) Proprietor: Telefonaktiebolaget LM Ericsson (publ), 164 83 Stockholm (SE)
(72) Inventor: CARLBERG, Klas, S-135 52 Tyresö (SE); KNUUTINEN, Anders, S-128 32 Skarpnäck (SE)
(74) Representative: HOFFMANN EITLE
(86) International application number: PCT/SE2002/001470
(87) International publication number: WO 2003/019371

(56) References cited:
- WO-A1-02/48876
- WO-A2-00/38383
- WO-A2-02/48886
- US-A- 5 627 888
- US-A1- 2002 073 409
- US-A1- 2002 112 231

## Description

### 1. FIELD OF THE INVENTION

The present invention pertains to data communications, and particularly to connection handling in a data communications system.

### 2. RELATED ART AND OTHER CONSIDERATIONS

Asynchronous Transfer Mode (ATM) technology (ATM) is a packet-oriented transfer mode which uses asynchronous time division multiplexing techniques. Packets are called cells and have a fixed size. A standard ATM cell consists of 53 octets, five of which form a header and forty eight of which constitute a "payload" or information portion of the cell. The header of the ATM cell includes two quantities which are used to identify a connection in an ATM network over which the cell is to travel, particularly the VPI (Virtual Path Identifier) and VCI (Virtual Channel Identifier). In general, the virtual path is a principal path defined between two switching nodes of the network; the virtual channel is one specific connection on the respective principal path.

A protocol reference model has been developed for illustrating layering of ATM. The protocol reference model layers include (from lower to higher layers) a physical layer (including both a physical medium sublayer and a transmission convergence sublayer), an ATM layer, and an ATM adaptation layer (AAL), and higher layers. The basic purpose of the AAL layer is to isolate the higher layers from specific characteristics of the ATM layer by mapping the higher-layer protocol data units (PDU) into the information field of the ATM cell and vise versa. There are several differing AAL types or categories, including AAL0, AAL1, AAL2, AAL3/4, and AAL5. AAL2 is a standard defined by ITU recommendation I.363.2.

An AAL2 packet comprises a three octet packet header, as well as a packet payload. The AAL2 packet header includes an eight bit channel identifier (CID), a six bit length indicator (LI), a five bit User-to-User indicator (UUI), and five bits of header error control (HEC). The AAL2 packet payload, which carries user data, can vary from one to forty-five octets.

AAL2/ATM has been selected for utilization of various aspects of data communications, including wireless (e.g., cellular) telecommunications. For example, AAL2/ATM has been selected as the user data transport in the wideband code division multiple (WCDMA) radio access network (e.g., the UTRAN) for the a project known as the Third Generation Partnership Project (3GPP), which has undertaken to evolve further the UTRAN and Global System for Mobile communications (GSM)-based radio access network technologies.

In a typical cellular radio system, mobile user equipment units (UEs) communicate via a radio access network (RAN) to one or more core networks. The user equipment units (UEs) can be mobile stations such as mobile telephones ("cellular" telephones) and laptops with mobile termination, and thus can be, for example, portable, pocket, hand-held, computer-included, or car-mounted mobile devices which communicate voice and/or data with radio access network.

The radio access network (RAN) covers a geographical area which is divided into cell areas, with each cell area being served by a base station (also referred to, in some technologies, as "node-B" or a "B-node"). A cell is a geographical area where radio coverage is provided by the radio base station equipment at a base station site. Each cell is identified, typically by a unique identity, which is broadcast in the cell. The base stations communicate over the air interface (e.g., radio frequencies) with the user equipment units (UE) within range of the base stations. In the radio access network, several base stations are typically connected (e.g., by landlines or microwave) to a radio network controller (RNC). The radio network controller, also sometimes termed a base station controller (BSC), supervises and coordinates various activities of the plural base stations connected thereto. The radio network controllers are typically connected to one or more core networks.

One example of a radio access network is the Universal Mobile Telecommunications (UMTS) Terrestrial Radio Access Network (UTRAN) mentioned above. UTRAN is essentially a wideband code division multiple access (W-CDMA) system. As those skilled in the art appreciate, in W-CDMA technology a common frequency band allows simultaneous communication between a user equipment unit (UE) and plural base stations. Signals occupying the common frequency band are discriminated at the receiving station through spread spectrum CDMA waveform properties based on the use of a high speed code, such as a pseudo-noise (PN) code. These high speed PN codes are used to modulate signals transmitted from the base stations and the user equipment units (UEs). Transmitter stations using different PN codes (or a PN code offset in time) produce signals that can be separately demodulated at a receiving station. The high speed PN modulation also allows the receiving station to advantageously generate a received signal from a single transmitting station by combining several distinct propagation paths of the transmitted signal. In CDMA, therefore, a user equipment unit (UE) need not switch frequency when handoff of a connection is made from one cell to another. As a result, a destination cell can support a connection to a user equipment unit (UE) at the same time the origination cell continues to service the connection. Since the user equipment unit (UE) is always communicating through at least one cell during handover, there is no disruption to the call. Hence, the term "soft handover." In contrast to hard handover, soft handover is a "make-before-break" switching operation.

A UTRAN network of WCDMA system such as that described above is just one example of a data communications system comprising nodes between which AAL2 protocol may be employed. Various data communications applications, including but not limited to WCDMA, use the AAL2 protocol "on demand", meaning that connections are established and/or released dynamically. The handling of "on demand" AAL2 connections requires, in each AAL2 node, a connection handling function which handles routing, Q.2630.1 signaling, and node internal resource handling (e.g., a switch board and device board). The terminology "q.aal2" is synonymous with Q.2630.1, and is described in a publication *New ITU-T Recommendation Q.2630.1 AAL Type 2 Signalling Protocol (Capability Set 1).*

In general, connection handling is implemented in software. For AAL2 connection handling, there are three basic types of data: infrastructure data (ID); resource handling data (RHD); and connection data (CD). At a given node (e.g., a base station node or a radio network controller (RNC) node, for example), infrastructure data (ID) includes a routing table for external infrastructure and addresses to AAL2 resources within the node, e.g., internal infrastructure. The resource handling data (RHD) contains a picture of the AAL2 resources of a node. It should be kept in mind, in this regard, that an AAL2 resource of a node can contribute to several AAL2 connections. Moreover, for an AAL2 connection several AAL2 resources can be utilized. The resource handling data (RHD) is data which exists under the precondition that a resource is operational. The connection data (CD) involves the Q.2630.1 signaling state machine, and thus is data which exists during the lifetime of a connection.

In conventional data communication networks, such as telecommunications networks for example, all AAL2 control handling functionality is performed on a single main processor (MP). This means that connection handling software as well as data needed for connection handling is located on one processor. Moreover, the setup of connections between devices is always done from one single processor.

Having all AAL2 connection handling functionality on one main processor means that the AAL2 node is not scaleable due to processor and memory limitations. In order to provide greater connection handling capability at a node, the node must be enhanced, e.g., by upgrading to have more powerful processors.

What is needed, and an object of the present invention, is a technique for distributing AAL2 connection handling functionality among plural processors (e.g., a processor cluster) of a data communications node.

WO 00/38383 relates to a telecommunications platform which has a cluster of processors which collectively perform a platform processing function. Plural processors of the cluster have IP capabilities and respective plural IP interfaces. The plural processors of the cluster all have the same IP address.

### BRIEF SUMMARY

In a node of a data communications network, connection handling functionality is distributed among plural processors of a processor cluster. Infrastructure data for the connection handling functionality is distributed among the plural processors of the processor cluster; resource handling data is partitioned among the plural processors of the processor cluster; and connection data is created on a selected processor of the processor cluster when an on-demand connection is established at the selected processor. For network-wide connections, a predistributor of the node routes signaling messages incoming to the node to an appropriate processor of the processor cluster.

When a connection is to be set up to another node, in software an instance of a connection object is established in a selected one of the processors of the cluster. The connection object both reserves and activates resources of the node for the connection to which the connection object corresponds. The connection object reserves resources of the node by communicating with one/several instance of resource control objects, and similarly activates the resource/resources by communicating with resource user plane object(s). The connection object determines which instance of the resource control objects to use for communication to the remote node (e.g., for a network-wide connection) by interrogating a routing object executed by a processor of the cluster. In one embodiment of the invention, the instance of the resource control object is preferably executed by the same processor which executes the connection object, but in a second embodiment the instance of the resource control object is executed on a different processor than the processor which executes the connection object. In setting up the connection to another node, the connection object sends a connection establish signaling message to the another node, e.g., by communicating with a signaling object executed by a processor of the cluster.

For a path incoming to the node, the processor cluster has an instance of a resource control path object executed by one of the processors of the cluster. The instance of the resource control path object handles signaling for the path or for a unique connection identifier within the path. The predistributor distributes certain signaling messages or indications concerning the path to the instance of the resource control path object. When plural paths have a signaling relation, an instance of a resource control signaling relation object is provided. The predistributor distributes certain signaling messages or indications concerning the signaling relation to the instance of the resource control signaling relation object.

In one embodiment, the predistributor has four distribution tables. Each of the following are utilized by at least one of the four distribution tables for routing an incoming signaling message or indication: destination signaling association identifier (DSAI); served user generated reference (SUGR); signaling link identity; and, path identity.

The node can have both plural end resources and plural link resources. Control of the plural end resources and the plural link resources is partitioned among the plural processors of the processor cluster. For each end resource an instance of a resource control object is executed by a processor of the processor cluster. For each of the plural link resources there is a path incoming to the node, and the processor cluster has an instance of a resource control path object executed by one of the processors of the cluster. The instance of the resource control path object handles signaling for the path or for a unique connection identifier within the path. An instance of a resource control signaling relation object representing plural paths having a signaling relation is also provided.

### BRIEF DESCRIPTION OF THE DRAWINGS

The foregoing and other objects, features, and advantages of the invention will be apparent from the following more particular description of preferred embodiments as illustrated in the accompanying drawings in which reference characters refer to the same parts throughout the various views. The drawings are not necessarily to scale, emphasis instead being placed upon illustrating the principles of the invention.
Fig. 1 is a schematic view of portions of a node of a data communications network, the node having a connection handling functionality implemented in a central processor cluster.
Fig. 2 is a diagrammatic view of the central processor cluster (CPC) of the node of Fig. 1, and showing various types of data involved in connection handling.
Fig. 3A is a diagrammatic view showing one embodiment of a predistributor for routing of signaling messages to central processors of the central processor cluster of Fig. 1.
Fig. 3B is a diagrammatic view showing another embodiment of a predistributor for routing of signaling messages to central processors of the central processor cluster of Fig. 1.
Fig. 4 is a diagrammatic view showing distribution of infrastructure data (ID) to central processors comprising the central processor cluster (CPC) of Fig. 1.
Fig. 5 is a schematic view partitioning of resource handling data at central processors comprising the central processor cluster (CPC) of the data communications node of Fig. 1.
Fig. 5A is a schematic view reallocation of resource handling data in the central processor cluster (CPC) of Fig. 5.
Fig. 6 is a simplified diagrammatic view showing an example connection model and objects involved in a procedure of setting up/tearing down a connection between two data communications nodes using the connection handling functionality of the present invention.
Fig. 7 is a simplified diagrammatic view of a precondition in the central processor cluster of Fig. 1 for connection setup in accordance with an example embodiment of the invention.
Fig. 7A and Fig. 7B are simplified diagrammatic views of differing scenarios of connection setup operations between two nodes of a data communication network.
Fig. 8 is a flowchart showing various steps involved in the respective setup scenarios of Fig 7A and Fig. 7B.
Fig. 9A and Fig. 9B are simplified diagrammatic views of differing scenarios of connection take down for the network wide connections illustrated in Fig. 7B and Fig. 7A, respectively.
Fig. 10 is a flowchart showing various steps involved in the respective take down scenarios of Fig 9A and Fig. 9B.
Fig. 11A is a simplified diagrammatic view of another scenario of connection setup operations between two nodes of a data communication network.
Fig. 11B is a simplified diagrammatic view of a scenario of connection take down for the connection setup in Fig. 11A.
Fig. 12 is a diagrammatic view showing an example signaling distribution model for a data communications node in accordance with an embodiment of the invention.
Fig. 13 is a diagrammatic view showing four distribution tables included in a predistributor of a data communications node of an embodiment of the invention.
Fig. 13-1 through Fig. 13-4 are diagrammatic views of example distribution tables included in the predistributor illustrated in Fig. 13.
Fig. 14A - Fig. 14B, Fig. 14C-1, Fig. 14C-2, Fig. 14D - Fig. 14F are diagrammatic views showing various example scenarios of distribution of various types of messages and indications within a central processor cluster (CPC) of an embodiment of the data communications node of the present invention.
Fig. 15 is a diagrammatic view showing an example resource control distribution model for a data communications node in accordance with an embodiment of the invention.
Fig. 16 is a diagrammatic view of portions of a node, showing end system resource control partitioning in accordance with an example embodiment of the invention.
Fig. 17A and Fig. 17B are diagrammatic views of portions of a node, showing example first and second cases, respectively, of partitioning of controlling link resources in accordance with an example embodiment of the invention.

### DETAILED DESCRIPTION

In the following description, for purposes of explanation and not limitation, specific details are set forth such as particular architectures, interfaces, techniques, etc. in order to provide a thorough understanding of the present invention. However, it will be apparent to those skilled in the art that the present invention may be practiced in other embodiments that depart from these specific details. In other instances, detailed descriptions of well known devices, circuits, and methods are omitted so as not to obscure the description of the present invention with unnecessary detail.

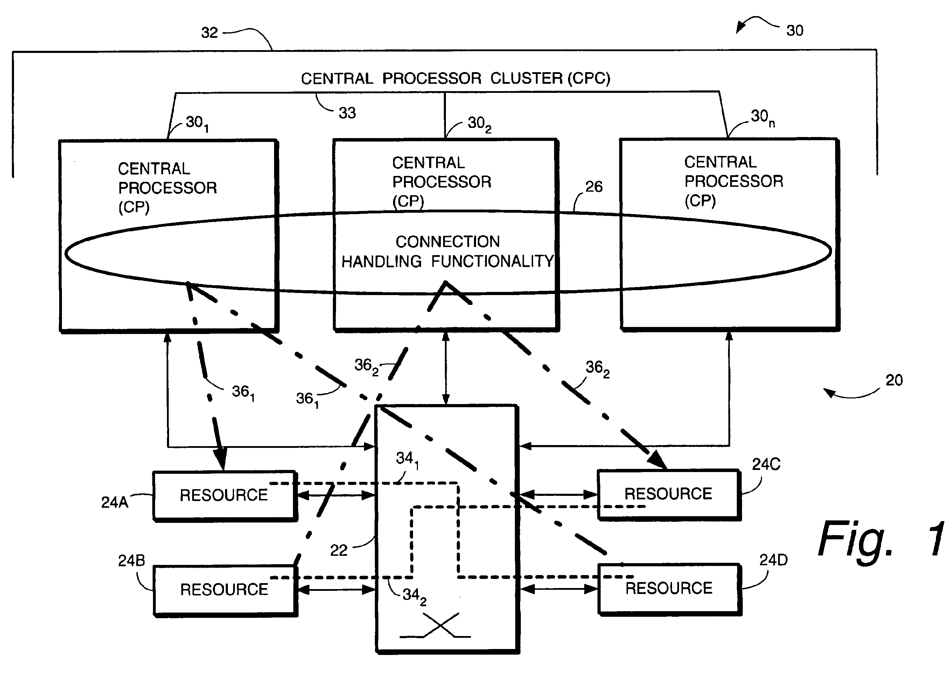

Fig. 1 shows, in simplified form, certain architecture of an example data communications node 20. The data communications node 20 includes a switch 22 having ports connected to various node resources 24A - 24D. In the illustrated embodiments, the node resources 24 can comprise one or more circuit boards, for which reason the node resources are also referred to herein as node boards, or resource boards.

Preferably, but not necessarily, switch 22 is an ATM switch which has one port connected by a bidirectional link to node resource 24A, another port connected to node resource 24B, and so forth. For sake of simplicity, only four node resources are illustrated in Fig. 1. It should be understood that more likely a greater number of node resources are connected to switch 22 in an actual implementation. Thus, the number of node resources is not critical to the present invention, although the present invention is particularly advantageous for a node having a large number of connections, which may mean that a large number of node resources may be present at the node.

In the prior art, many data communications nodes or platforms have a single powerful processor which serves as a central processing resource for the platform. The central processing resource provides an execution environment for application programs and performs supervisory or control functions for other constituent elements of the node or platform. In contrast to a single central processor node, Fig. 1 shows a generic multiprocessor node 20 of a data communications network, such as a cellular telecommunications network, for example, according to the present invention. The data communications node 20 of the present invention has a central processing resource of the platform distributed to plural processors 30, each of which is referenced herein as a central processor or CP. Collectively the plural central processors 30 comprise a central processor cluster (CPC) 32. Fig. 1 shows the central processor cluster (CPC) 32 as comprising n number of central processors 30, e.g., central processors 30₁ through 30ₙ.

The central processors 30 comprising central processor cluster (CPC) 32 are connected by inter-processor communication links 33. Moreover, the constituent elements of telecommunications platform 20 communicate with one another using an unillustrated intra-platform communications system. The transport layer for communication between the central processors 30 is not critical to the invention. Examples of intra-platform communications system include a switch, a common bus, and can be packet oriented or circuit switched.

The node resources 24 can be, and typically are, situated on a circuit board or device board or the like which is connected to a switch port of switch 22. Such boards can have other processors mounted thereon. One of these other processors can be a board processor [BP] which controls functions of the board, including functions of the node resource. In addition to the board processor [BP], yet other processors known as special processors (SPs) may be situated on the board for performing dedicated tasks germane to the data communications functions of data communications node 20. Where appropriate, the board processor [BP] and the special processor(s) may comprise the node resource.

Two basic types of node resources are link resources and end system resources. Link resources connect externally to other platforms or other nodes of the data communications system. An example of a link resource is an AAL2 multiplexer. Some of the link resources can be on boards which function as extension terminals or exchange terminals (ETs), such as those shown in United States Patent US 6480492 . End system resources terminate connections at the node.

Connection between node resources can either be node internal connections (where both resources are end system resources) or part of a network-wide connection (where at least one resource is a link resource).

In accordance with an aspect of the present invention, connections are established, and then released, between the node resources 24 of data communications node 20. In this regard, a connection between two node resources 24 is established through switch 22. The illustrated embodiment particularly pertains to establishment and release of AAL2 connections between node resources 24.

In the present invention, connection handling functionality 26 for the handling of connections is distributed to plural central processors 30 of central processor cluster (CPC) 32. That is, one or more connections are handled by one central processor 30, while one or more other connections are handled by another central processor 30. For example, Fig. 1 shows a situation in which a connection between node resource 24A and 24D (represented in simplified fashion by dashed line 34₁) is handled by central processor 30₁ (as reflected by dashed-dotted lines 36₁), while a connection between node resource 24B and 24C (represented in simplified fashion by dashed line 34₂) is handled by central processor 30₂ (as reflected by dashed-dotted lines 36₂).

In the illustrated embodiments, the connections described happen to be AAL2 connections. The invention is not limited to AAL2 connections, however. For example, the invention is also applicable to bearer services other than AAL2 which have a network signaling protocol where the recipient of the signaling messages is distributed and where the protocol messages contain information element(s) making distribution possible. Thus, as used herein, the phase "AAL2 connection" is intended to encompass connections of these other bearer services.

The principles of distributing infrastructure data (ID) and of partitioning resource handling data (RHD) are applicable to any distributed connection handling function which is used to set up connections between resources.

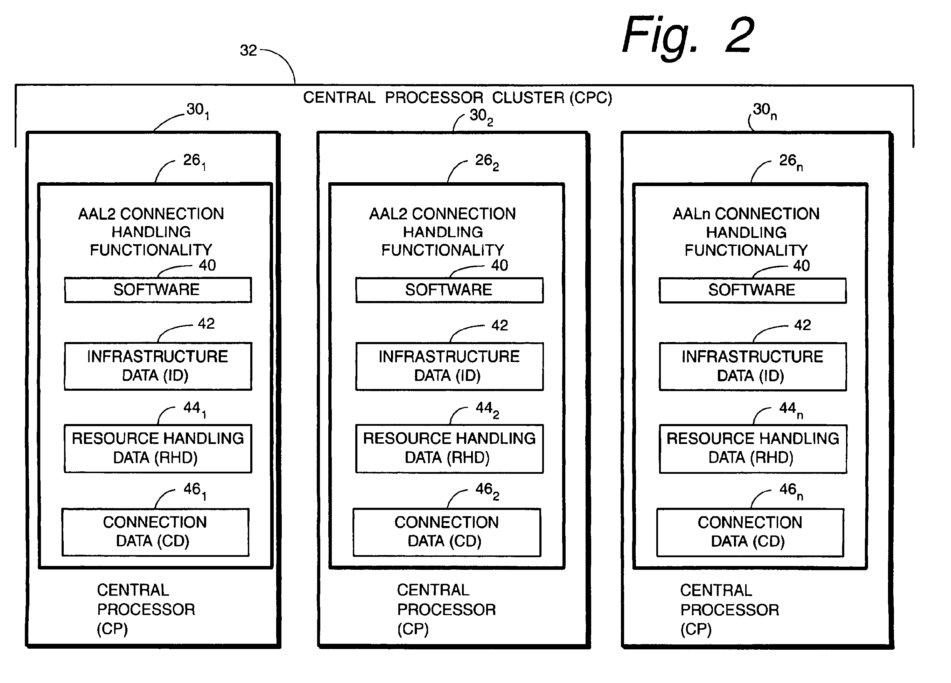

The distribution of the connection handling functionality 26 to the plural central processors 30 of central processor cluster (CPC) 32 has implications for each of connection handling software, infrastructure data (ID), resource handling data (RHD), and connection data (CD). These implications are described below with respect to the illustrated embodiment of Fig. 2.

In the example of Fig. 2, all connection handling software of connection handling functionality 26 is distributed to the central processors 30 of central processor cluster (CPC) 32. The central processor 30₁ has portion 26₁ of connection handling functionality 26, central processor 30₂ has portion 26₂ of connection handling functionality 26, and so forth. Each of the central processors 30 has its own copy of connection handling software 40 and its own copy of infrastructure data (ID) 42. The resource handling data (RHD) is partitioned between the central processors 30 of central processor cluster (CPC) 32. For example, Fig. 2 shows resource handling data (RHD) 44 existing in partitions 44₁ through 44ₙ for each of central processors 30₁ through 30ₙ. The connection data (CD) is created at a central processor 30 when an "on demand" connection is established for that central processor 30.

In one aspect of the present invention, one connection (e.g., AAL2 connection) is handled completely within one central processor 30 of central processor cluster (CPC) 32. For network wide connections, this means that node internal resource handling for one connection is performed on one central processor 30. This also means for network-wide connections that all Q.2630.1 signaling messages received from the network and concerning a specific AAL2 connection must be routed to the particular central processor 30 handling this connection.

To achieve routing of signaling, connection identities for the various bearer services (e.g., AAL2 connections) are partitioned among the central processors 30 of central processor cluster (CPC) 32. The connection identity can be, for example, in the form of SUGR (Served User Generated Reference) and signal association identifiers. In addition, for network-wide connections a predistributor 50 is provided at central processor cluster (CPC) 32 for handling Q.2630.1 signaling messages received from a signaling network 52 (such as, for example a signaling system no. 7 network or a SAAL UNI connection network).

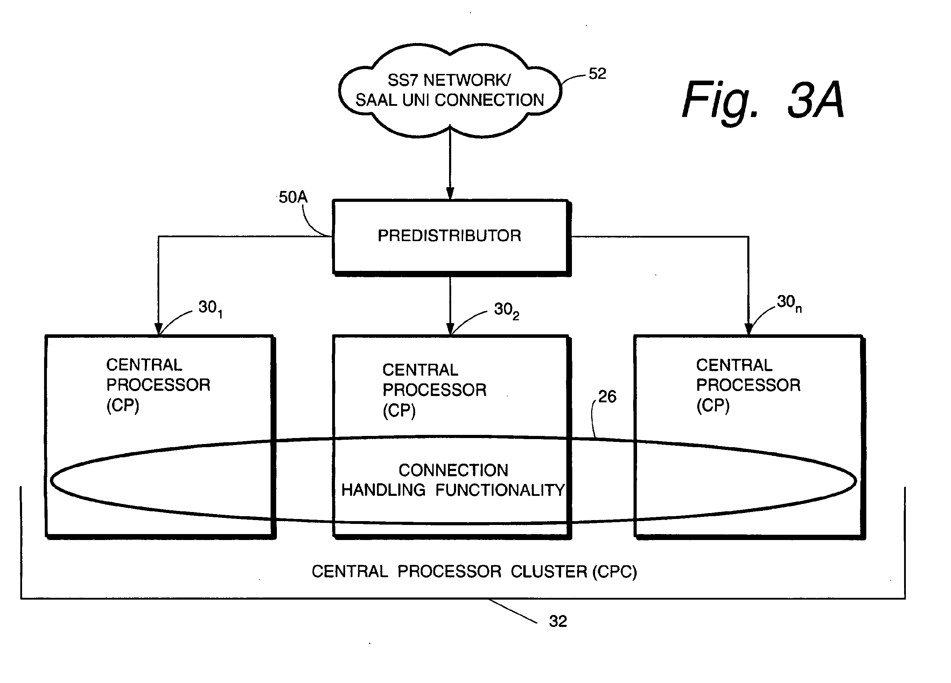

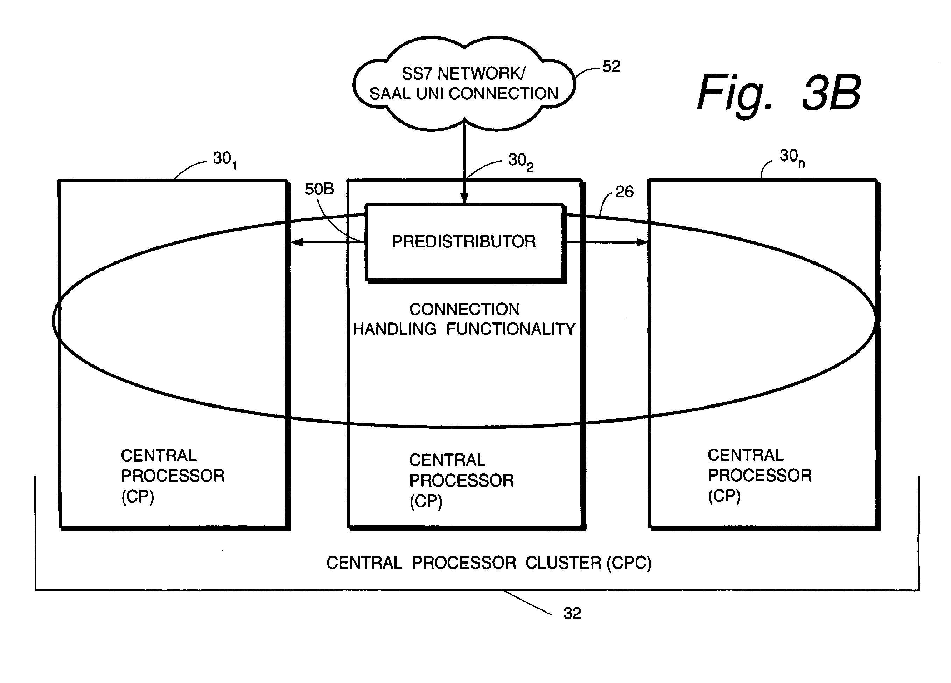

In one embodiment, shown in Fig. 3A, the predistributor is in the form of an separate predistributor 50A which is connected between the central processor cluster (CPC) 32 of data communications node 20 and the signaling network 52. In a second embodiment, illustrated in Fig. 3B, predistributor 50B is included in one of the central processors 30 of central processor cluster (CPC) 32.

In either example embodiment, the predistributor 50 routes the messages to a correct one of the central processors 30 which is involved in the connection handling for the particular AAL2 network-wide connection to which the incoming message pertains. While the predistributor 50 may not know which connections are handled by which processor 30, the connection identities of the received messages are partitioned or expressed in such a manner that the predistributor 50 can ascertain from the connection identity which processor handles the connection for the incoming message. For example, connection identities for all connections being handled by a specific one of the central processors may have a same predetermined value in a predetermined field (e.g., a most significant byte of the connection identity). This predetermined value in the connection identity enables the predistributor 50 to ascertain the appropriate processor identity, e.g., processor. Thus, the predistributor 50 only has to know the processor identities and how to find the appropriate processor using the connection identity. Once the appropriate processor has been found, the message is routed to the right connection instance of that appropriate processor. For connection control messages such as establish and release message, the SUGR/signaling association identifiers are utilized as the connection identities for distribution/routing. For other kinds of messages, the signaling relation and (possibly) the path ID can also for the connection identities.

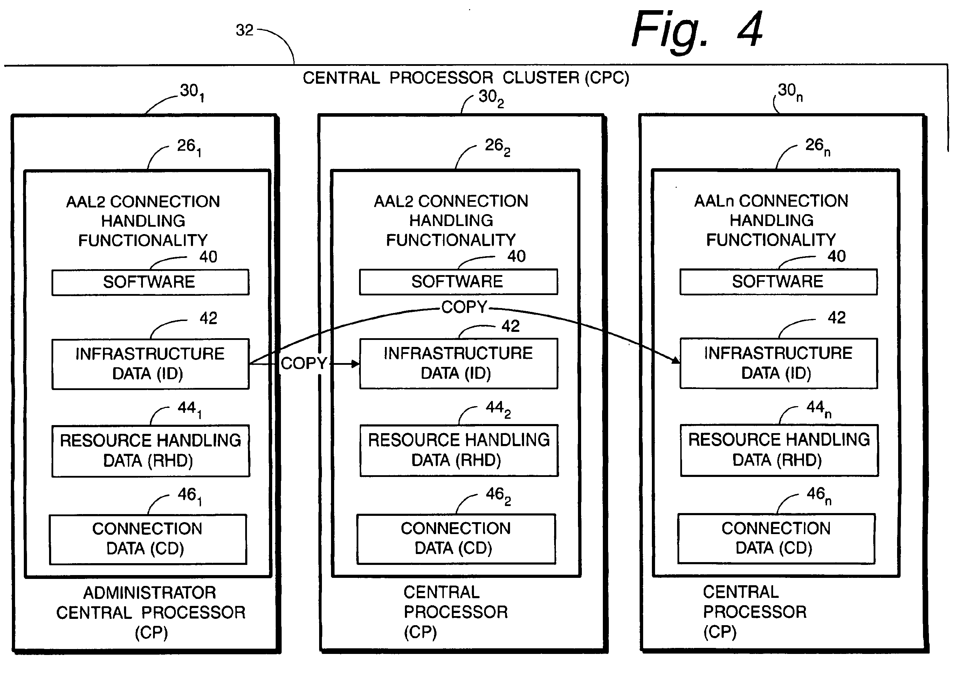

The infrastructure data (ID) utilized for AAL2 connection handling includes both internal infrastructure data (ID) and external infrastructure data (ID) (used for setup of network-wide connections). The internal infrastructure data (ID) pertains to infrastructure data (ID) within data communications node 20, while the external infrastructure data (ID) pertains to infrastructure data (ID) outside of data communications node 20. In the connection handling functionality 26 of the present invention copies of the infrastructure data (ID) and changes to the infrastructure data (ID) are distributed to all central processors 30 of central processor cluster (CPC) 32 that are involved in connection handling. In particular, as shown in Fig. 4, one of the central processors 30 in central processor cluster (CPC) 32 is designated as an administrator. For example, central processor 30₁ is selected in the Fig. 4 embodiment as being an administrator central processor 30. The external infrastructure data (ID) is configured in the administrator central processor 30 by an operator (e.g., involving operator input through input device(s) such as a keyboard, etc.). The internal infrastructure data (ID) is built up within the administrator central processor 30 as AAL2 resources of the data communications node 20 are registered at the administrator central processor 30. Fig. 4 particularly shows all the infrastructure data (ID), both internal and external, being distributed (e.g., copied) to the other central processors 30 of central processor cluster (CPC) 32. The copying of the infrastructure data (ID) is accomplished using, e.g., the inter-processor communication links 33.

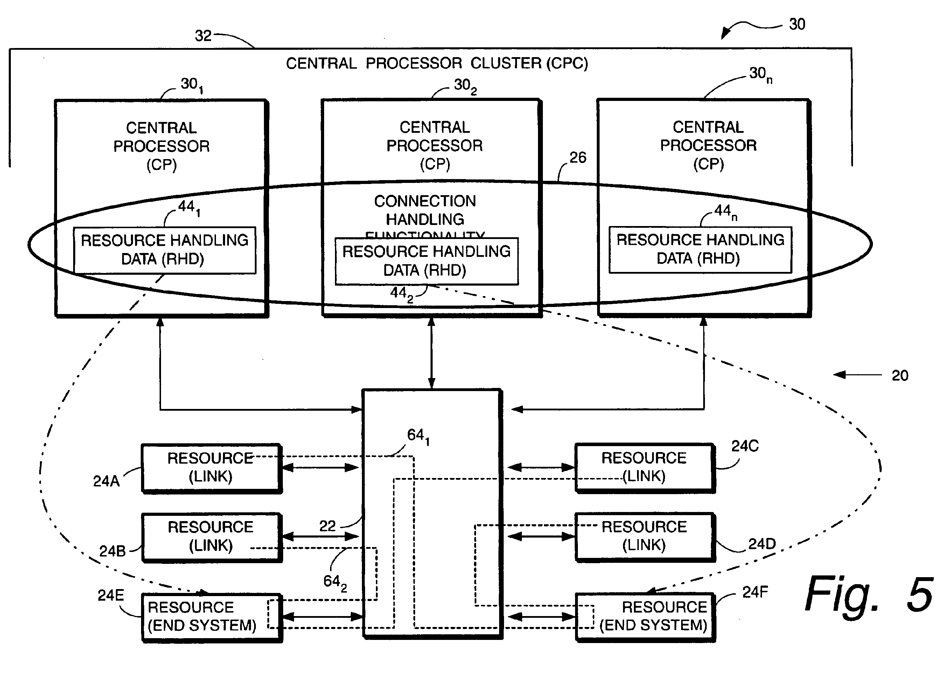

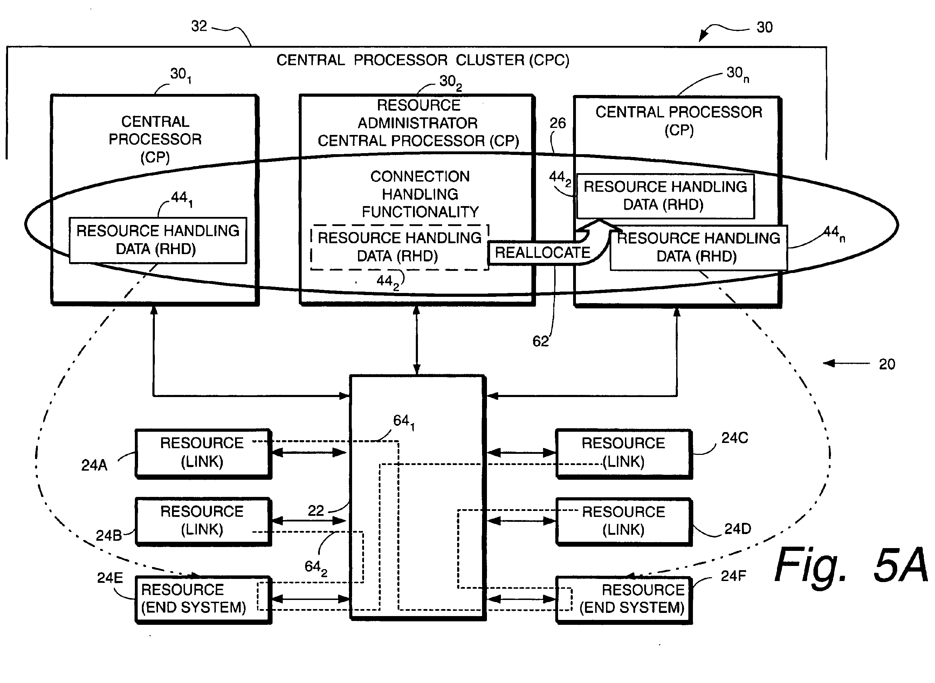

Fig. 5 shows data communications node 20 augmented with node resource 24E and node resource 24F. The node resources 24A - 24D are illustrated as being the aforementioned link resources, which are included on ET boards. The node resources 24E and 24F are end system resources, particularly node internal user plane resources which can also be situated on boards connected to ports of switch 22 in like manner as node resources 24A-24D. The resources 24A - 24F are also referred to herein as REUPs (resource user plane), since these resources are in the user plane of data communications node 20. In view of the presence of end system resources 24E and 24F, the actual paths of connection data through switch 22 may more include end system resources 24E and 24F, and thus may more realistically appear as paths 64₁ and 64₂ in Fig. 5.

As also shown in Fig. 5, the resource handling data (RHD) of connection handling functionality 26 is divided into partitions 44₁ - 44ₙ. The partitions 44₁ - 44ₙ are independent of each other in the sense that one partition does not need to know anything about the data in the other partitions. The partitioning of resource handling data (RHD) is implemented so that each central processor 30 holds the resource handling data (RHD) necessary for the node resources for which the central processor 30 typically sets up connections. For example, in the Fig. 5 perspective of the same situation shown in Fig. 1, resource handling data (RHD) partition 44₁ pertains to end system resource 24E which is set up by central processor 30₁, while resource handling data (RHD) partition 44₂ pertains to end system resource 24F which is set up by central processor 30₂. The dashed-double-dotted lines of Fig. 5 show the correspondence of resource handling data partitions to end system resources.

The number of partitions of resource handling data (RHD) on the central processor 30 can thus vary, and depend on the capacity requirements in terms of traffic load. Moreover, as illustrated in Fig. 5A, and depending on the traffic model, partitions 44 can be reallocated between central processors 30 in runtime. In particular, Fig. 5A shows a situation in which one of the central processors 30, serving as a resource administrator, keeps track of the resource picture on the different central processors 30 of data communications node 20. The resource administrator central processor 30 can reallocate the partitions 44 between central processors 30 if needed. For example, Fig. 5A shows (e.g., by arrow 62) resource administrator central processor 30₂ having reallocated partition 44₂ corresponding to end system resource 24F from central processor 30₂ to central processor 30ₙ. It is contemplated that reallocation of partitions occurs only when needed, e.g., not on a frequent basis.

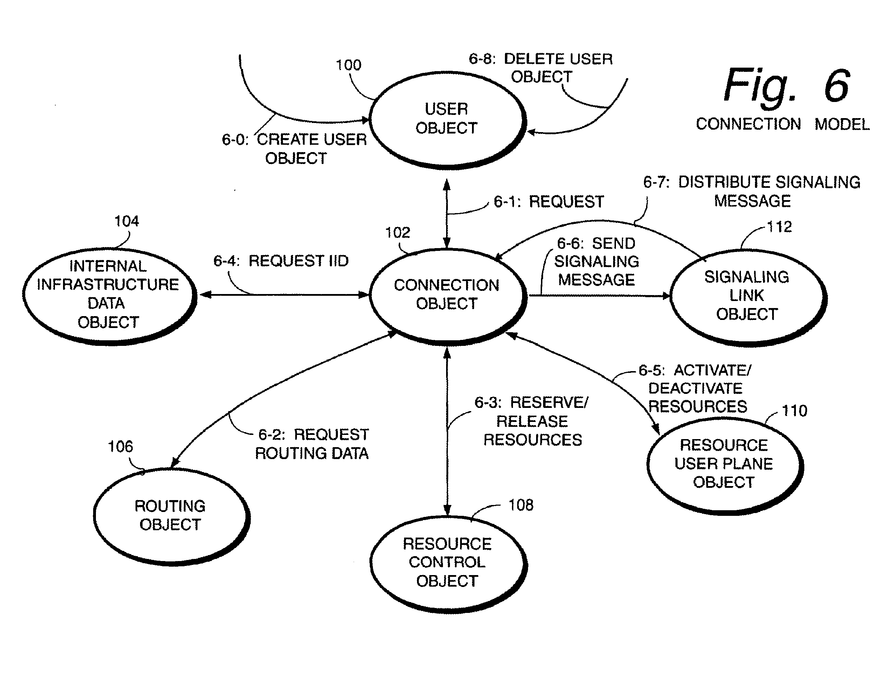

In general, the connection handling software 40 distributed to each central processor 30 utilizes certain software objects. As understood by those skilled in the art, these software objects can include coded instructions as well as data utilized in conjunction with those instructions. Fig. 6 describes aspects of an example connection model for one connection which traverses data communications node 20. As such, Fig. 6 illustrates (as ovals) various different types of software objects involved in the connection model. Not all software objects of the model for a particular connection are necessarily handled (e.g., executed) by the same processor.

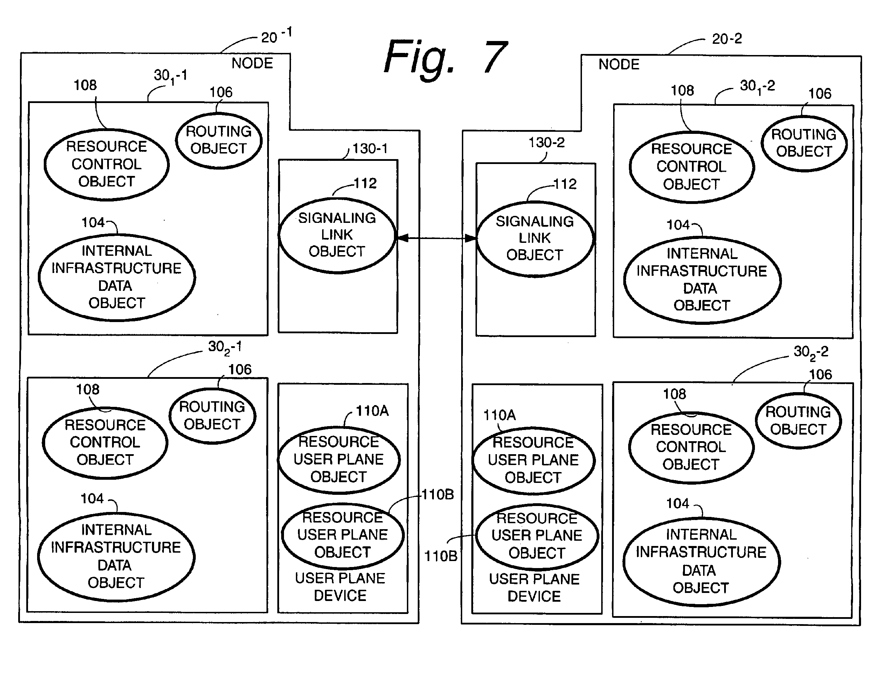

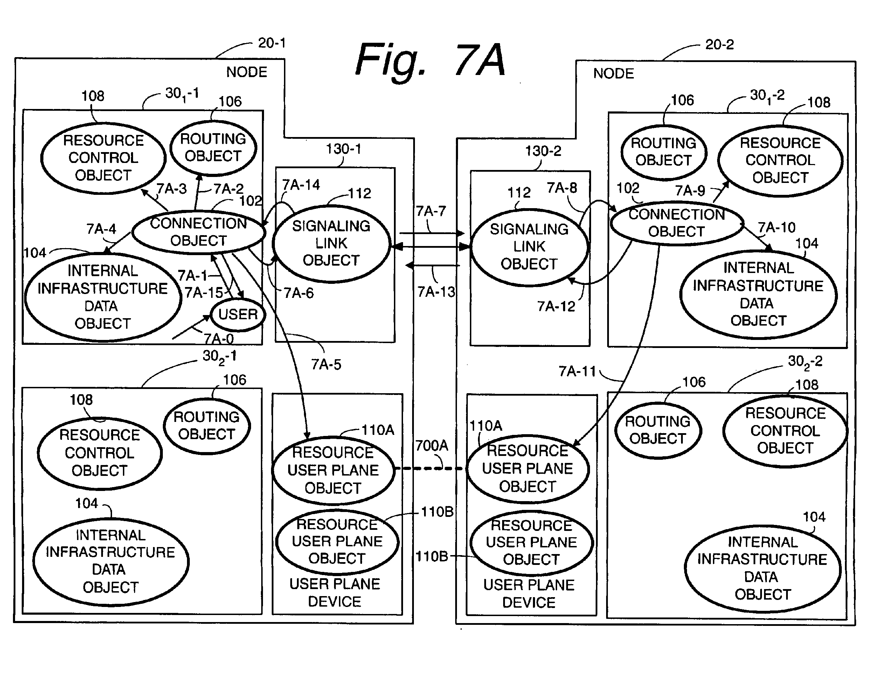

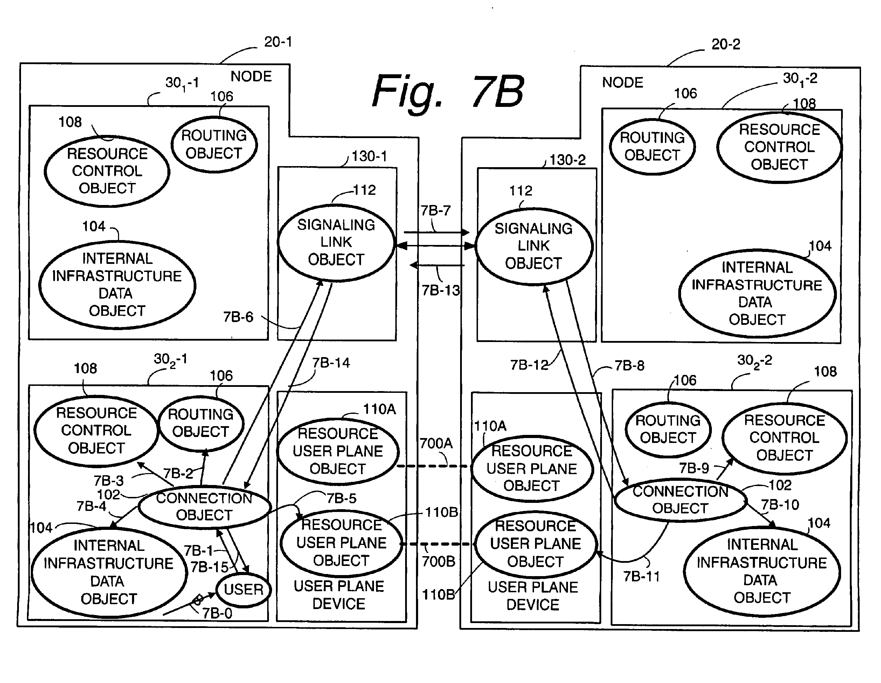

Fig. 6 and various other ensuing figures are depictions of a simplified resource model. For sake of simplification, only one resource in each node (corresponding to a REC instance) is involved in the connection setup/teardown. While other resources could also be involved, the focus here is the description of object and communication between objects. It should be understood that each node can have both end system resources and link (ET) resources as shown in Fig. 5 and Fig. 5A. Fig. 7 - Fig. 11 show handling of network-wide connections.

In Fig. 6, event 6-0 depicts creation of a user object 100. The user object 100 is the software object which orders a setup or release of an AAL2 connection. Such AAL2 connection can be, for example, a connection between a radio network control (RNC) node and a base station (BS) node in a radio access network (UTRAN network, for example). The request by a user object 100 for connection setup creates an instance of a connection object 102 which becomes associated with that user. The other objects shown in Fig. 6 are maintained primarily for servicing plural connections, e.g., plural instances of connection objects 102, although some of the objects have instances which are related to unique connection/user instances.

As event 6-1 in the procedure of Fig. 6, user object 100 requests a specific action (e.g., connection set up or connection release), which request is forwarded to connection object 102. The connection object 102 represents one unique connection, and holds data for the connection such as connection state, timers for the connection, and so forth. The data held by connection object 102 can be viewed as the connection data (CD) mentioned earlier, which is stored in connection data (CD) 46₁ of the particular central processor 30 which handles the connection.

Upon connection set up connection object 102 performs several operations. As shown by event 6-2, when the connection is a network-wide connection, the connection object 102 requests routing data from a routing object 106. The routing object 106 includes a distributed routing table which forms part of the infrastructure data (ID). The routing object 106 has a picture or mapping of which signaling resources and link resources are to be used when connections are set up to remote destinations (e.g., destinations beyond data communications node 20). In addition, routing object 106 has a picture or mapping of where different signaling link and REC link instances are distributed.

As shown by event 6-3, connection object 102 also reserves resources with a resource control object (REC) 108. The resource control object (REC) 108, being a resource control entity, keeps, for a central processor 30, a picture of the resource situation for the resource user plane resources (REUPs), e.g., for a link resource or an end system resource. When a connection object 102 requests reservation or release of a resource from a REC instance, the resource picture for the REC instance changes. As understood with regard to the foregoing discussion of resource handling data (RHD) partitions 44, REC instances are partitioned on central processor cluster (CPC) 32. Each REUP instance corresponds to one REC instance, i.e., several REC instances can reside on a central processor.

As shown by event 6-4 in Fig. 6, connection object 102 also requests infrastructure data (ID) from internal infrastructure data (IID) object 104. The internal infrastructure data (IID) object 104 holds some of the infrastructure data (ID) described previously as being distributed (see 42 in Fig. 2) to the central processors 30 of central processor cluster (CPC) 32. The infrastructure data (ID) held by internal infrastructure data (IID) object 104 includes a picture of where resource user plane (REUP) instances for data communications node 20 are located.

As shown by event 6-5, connection object 102 also activates resource user plane (REUP) object 110. The resource user plane (REUP) object 110 corresponds to the resource user plane resource which is controlled by resource control object (REC) 108. In the situation depicted in Fig. 5, for example, the resource user plane could be one of the link resources 24A - 24D or one of the end system resources 24E - 24F.

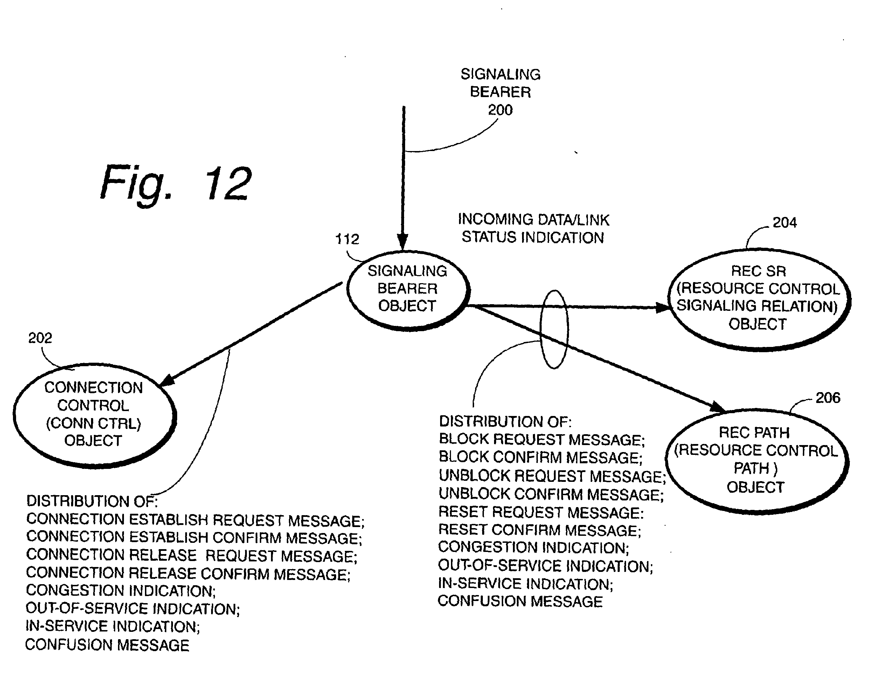

Fig. 6 also shows a signaling bearer object 112, also herein termed a signaling object. The signaling bearer object 112 is a signaling resource to which messages (pertinent to connection handling functionality 26) outgoing (from central processor 30) to a certain destination are directed. In essence, signaling bearer object 112 represents the destination, and event 6-6 depicts forwarding of the signaling message to signaling bearer object 112. Conversely, event 6-7 in Fig. 6 depicts incoming messages, received on a signaling link, as being received at signaling bearer object 112 representing that link and then distributed to the central processor 30 where the connection object 102 for the connection is located. The distribution of incoming signaling messages for Q.2630.1 signaling for a particular embodiment is described subsequently in more detail with reference to Fig. 12 et. seq. below.

Various arrows associated with the events of Fig. 6 as described above are depicted as double headed for the purpose of indicating that a response is received to a request made by connection object 102. Moreover, while the connection model of Fig. 6 has primarily been described above with reference to the setup of a connection, it will be appreciated that correlative actions of various events are performed for tearing down of connections. For example, when user object 100 requests tearing down of a connection, as event 6-5 connection object 102 requests deactivation of resources, and as event 6-3 connection object 102 requests a release of resources.

As mentioned above, not all software objects of the model for a particular connection are necessarily handled (e.g., executed) by the same processor. For example, the signaling bearer object 112 and the resource user plane object 110, and in some cases the resource control object 108, are executed on a different processor than the other objects involved in the same connection. For example, the resource control object 108 and the associated resource user plane object 110 are typically executed on different processors. The resource control object 108 is typically executed on a central processor 30 in the cluster, while the resource user plane object 110 is executed on a board where the actual data transfer takes place. For an end system resource, the resource user plane object 110 can be executed on a special purpose processor. For link resources, the resource user plane object 110 can be executed on the board where the multiplexor/demultiplexer of the AAL2 path is terminated (e.g., an ET board).

Fig. 7 illustrates, in simplified diagrammatic fashion, a precondition in the central processor cluster (CPC) 32 for connection setup of a network-wide connection in accordance with an example embodiment of the invention. The precondition of Fig. 7 forms a foundation upon which various scenarios of connection setup are hereinafter described with reference to Fig. 7A - Fig. 7B. In the precondition depicted in Fig. 7, two data communications nodes 20-1 and 20-2 are illustrated. Each node 20-1 and 20-2 has a corresponding central processor cluster. The central processor cluster of each data communications node 20 is illustrated as having its connection handling functionality being comprised of two central processors 30. For example, the connection handling functionality 26 of node 20-1 has central processors 30₁-1 and 30₂-1, while the connection handling functionality of node 20-2 has central processors 30₁-2 and 30₂-2. The processors 130-1 and 130-2, for nodes 20-1 and 20-2, respectively, primarily serve for hosting a signaling function, e.g., signaling bearer object 112. The signaling bearer object 112 serves the function of the predistributor 50. That is, the signaling bearer object 112 executed on processors 130 handle signaling to remote nodes and distribution of incoming messages. Therefore, in view of their execution of the signaling bearer object 112, the processors 130 themselves can be viewed as performing the role of predistributor 50, as above described.

Before setting up connections, the objects shown in Fig. 7 must have already been created. The creation of the objects illustrated in Fig. 7 is typically accomplished through configuration, e.g., by an operator programming the central processors 30 of the data communications nodes 20.

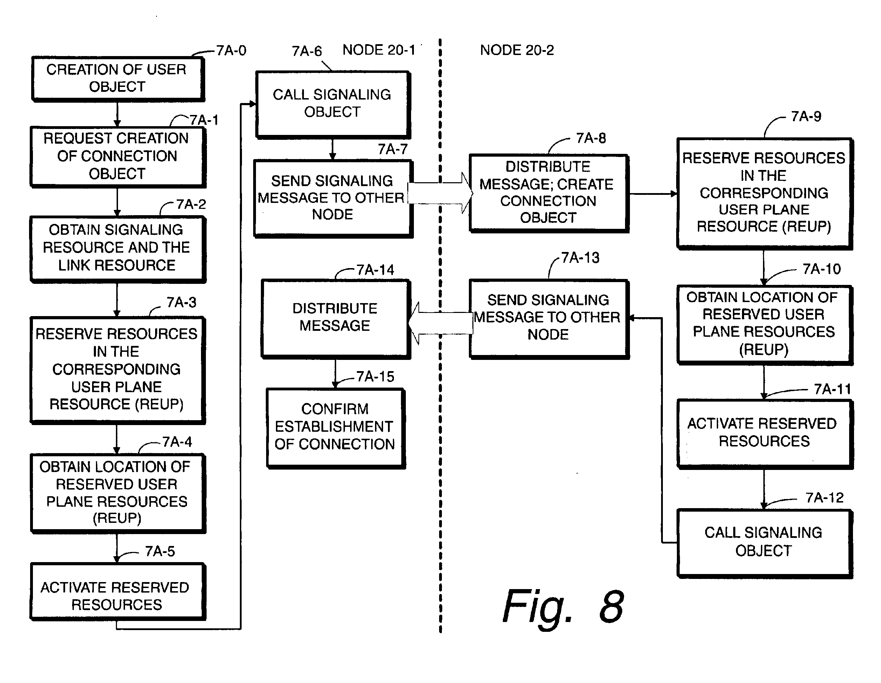

The nodes diagram of Fig. 7A and the flowchart of Fig. 8 together show a first example scenario of connection setup. The connection setup scenario of Fig. 7A and Fig. 8, like other ensuing scenarios, assumes that the preconditions of Fig. 7 have first been established. As a first event 7A-1 in the setup scenario of Fig. 7A, a user object 100 is created in data communications node 20-1. As event 7A-0 the user object 100 in data communications node 20-1 requests creation of a connection object 102 to setup a connection to node 20-2. As event 7A-2, connection object 102 calls routing object 106 to obtain the signaling resource and the link resource to use for the connection being setup. Next, as event 7A-3, connection object 102 calls resource control object (REC) 108 to reserve resources in the corresponding user plane resource (REUP). For event 7A-4, connection object 102 calls the internal infrastructure data (IID) object 104 to get the location of the user plane resources (REUP) which were reserved. This enables connection object 102 to next call, as event 7A-5, the user plane object 110A to activate the resource instance which was reserved in event 7A-3. As event 7A-6, connection object 102 calls signaling bearer object 112 to send a connection setup signaling message to data communications node 20-2. Event 7A-7 shows the connection setup signaling message actually being sent from signaling bearer object 112 of data communications node 20-1 to signaling bearer object 112 of data communications node 20-2. The setup signaling message is also referred to herein as an establish connection request message.

Upon receipt of the setup signaling message at signaling bearer object 112 of data communications node 20-2, as event 7A-8 the signaling message is distributed (by processor 130 functioning as predistributor 50) to central processor 30₁-2. The distribution decision is made on any suitable basis, such as (for example) a load sharing algorithm or on the basis of SUGR. Also included in event 7A-8 is signaling bearer object 112 requesting creation of connection object 102 in central processor 30₁-2 for the connection which is the subject of the setup signaling message. The connection object 102 of data communications node 20-2 thus represents the connection in data communications node 20-2.

After establishment of connection object 102 in data communications node 20-2, the connection object 102 of data communications node 20-2 makes various requests to established objects of central processor 30₁-2. For example, as event 7A-9 connection object 102 calls resource control object (REC) 108 to reserve resources in the corresponding user plane resource (REUP) 110. The connection object 102 also calls internal infrastructure data (IID) object 104 to get the location of the user plane resource (REUP) [event 7A-10] . Further, as event 7A-11 connection object 102 calls the resource user plane (REUP) object 110 to activate the resource instance which was reserved as event 7A-9. Event 7A-12 shows connection object 102 calling signaling bearer object 112 to send a setup response signaling message back to data communications node 20-1. Transmission of the response signaling message to data communications node 20-1 is reflected by event 7A-13. The response signaling message is also referred to herein as the establish connection confirmation message.

At data communications node 20-1, the response signaling message is distributed (as event 7A-14) to the central processor in data communications node 20-1 which is handling the connection, i.e., central processor 30₁-1, and particularly to connection object 102 executed by that processor for the connection. As event 7A-15 connection object 102 confirms to user object 100 that the setup has been completed.

Thus, as described with reference to the foregoing basic events, a connection (illustrated by broken line 700A in Fig. 7A) has been established between user plane resources in data communications node 20-1 and in data communications node 20-2. The control plane connection is established in central processor 30₁-1 and central processor 30₁-2. The connection object 102 has stored object references to user object 100 and to the reserved/activate resource in REC and REUP, respectively.

The nodes diagram of Fig. 7B shows a second example scenario of connection setup. In particular, Fig. 7B shows events involved in setup of a second connection subsequent to setup of the connection previously discussed with reference to Fig. 7A. For sake of simplicity, the events involved in the earlier setup of the connection of Fig. 7A are not illustrated in Fig. 7B, excepting the resulting user plane connection 700A.

The events 7B-0 through 7B-15 illustrated in the scenario of Fig. 7B are analogous to events 7A-0 through 7A-15 of Fig. 7A, with a difference being that in Fig. 7B the particular user object 100 and connection object 102 that are involved in the connection set up are associated in data communications node 20-1 with central processor 30₂-1 rather than central processor 30₁-1. Similarly, in Fig. 7B, the connection object 102 for data communications node 20-2 is associated with central processor 30₂-2 rather than central processor 30₁-2. This means that signaling link objects 112 in data communications node 20-1 and data communications node 20-2 distribute the incoming setup/response messages to central processors 30₂-1 and 30₂-2 in data communications nodes 20-1 and 20-2, respectively, rather than to central processors 30₁-1 and 30₁-2. Moreover, the resource control objects (REC) 108, the routing object 106, and the internal infrastructure data (IID) objects 104 utilized for the connection setup of Fig. 7B are also located on the second central processors 30₂ of data communications node 20-1 and 20-2.

Fig. 7B depicts, by broken line 700B, that the events of Fig. 7B establish a connection between user plane resources in data communications node 20-1 and data communications node 20-2. The control plane connection is established in the central processors 30₂ of both nodes 20-1 and 20-2. The connection object 102 has stored object references to the user object 100 and to the reserved/activated resource in REC and REUP, respectively.

The flowchart of Fig. 8 also applies to the scenario of Fig. 7B, it being understood that the processors involved in the events are central processor 30₂-1 and central processor 30₂-2 rather than central processor 30₁-1 and central processor 30₁-2 as discussed in the context of Fig. 7A.

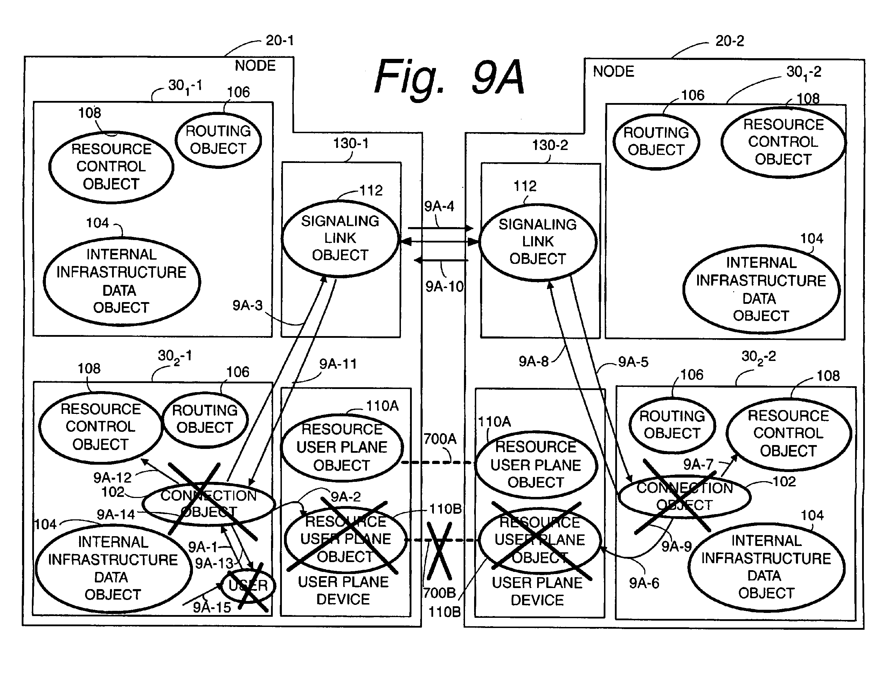

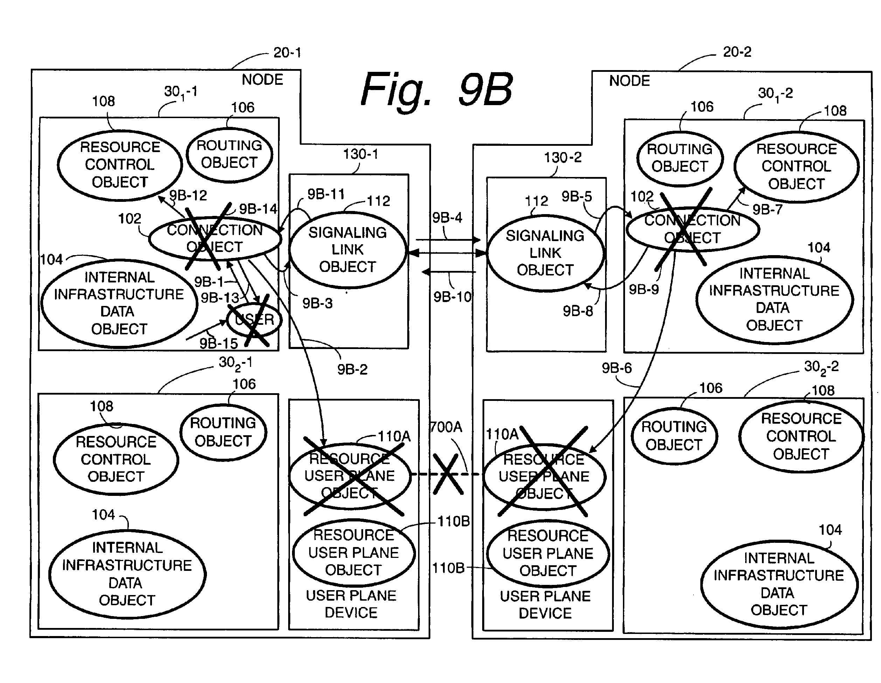

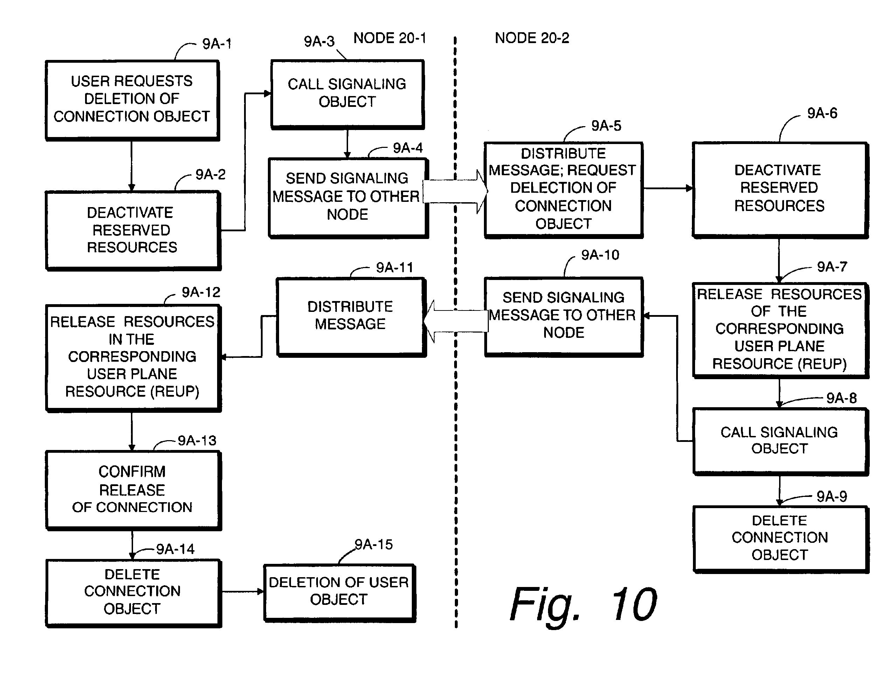

After the connection of Fig. 7A has been setup, and followed by the setup of the connection of Fig. 7B, it is assumed that the connection of Fig. 7B is to be torn down, after which the connection of Fig. 7A is to be torn down. Given this sequence of events, Fig. 9A illustrates basic events involved in the take down or tear down of the connection of Fig. 7B, while Fig. 9B illustrates basic events involved in the take down or tear down of the connection of Fig. 7A. Both tear down scenarios of Fig. 9A and Fig. 9B are understood with reference to the flowchart of Fig. 10.

In the connection tear down scenario of Fig. 9A, as event 9A-1 user object 100 in data communications node 20-1 requests deletion of connection object 102, which ultimately will result in releasing the connection to data communications node 20-2. It will be recalled that the scenario of Fig. 9A involves central processor 30₂-1 in data communications node 20-1. In response to the request of event 9A-1, as event 9A-2 connection object 102 calls resource user plane (REUP) object 110B for the purpose of deactivating the resource instance. The connection object 102 then, as event 9A-3, calls signaling bearer object 112 of data communications node 20-1 to send a connection release signaling message to data communications node 20-2. Actual transmission of the connection release signaling message from data communications node 20-1 to data communications node 20-2 is depicted as event 9A-4 in Fig. 9A and Fig. 10. The connection release signaling message is also referred to herein as a connection release request message.

Upon receipt of the connection release signaling message at data communications node 20-2, as event 9A-5 the signaling bearer object 112 of data communications node 20-2 distributes the message to central processor 30₂-2, and requests deletion of the connection object 102 for the connection that is to be torn down. The deletion request first causes connection object 102 to call resource user plane (REUP) object 110B for the purpose of deactivating the resource instance, as illustrated by event 9A-6. As event 9A-7, connection object 102 also calls resource control object (REC) 108 in order to release the reserved resources. Then, as event 9A-8, connection object 102 calls signaling bearer object 112 of data communications node 20-2, authorizing issuance of a release confirmation message back to data communications node 20-1. The connection object 102 is deleted, as depicted by the crossing out (with an X) of connection object 102 labeled as event 9A-9.

Transmission of the connection release confirmation message from data communications node 20-2 to data communications node 20-1 is illustrated as event 9A-10 in Fig. 9A and Fig. 10. Upon receipt of the connection release confirmation message, the signaling bearer object 112 of data communications node 20-1 plays the role of predistributor 50 to distribute (as event 9A-11) the incoming message to the appropriate processor where the connection object is found, i.e., to central processor 30₂-1 where connection object 102 is located. Upon receipt of the connection release confirmation message, connection object 102 calls resource control object (REC) 108 to release the reserved resources (event 9A-12). Connection object 102 confirms to user object 100 that the connection has been released or torn down as event 9A-13. The connection object 102 for the connection to be released is then deleted as event 9A-14. Release of the connection is also shown in Fig. 9A by an crossing out (with an X) of user plane connection 700B. Lastly, as depicted by event 9A-15, the user object is deleted.

As indicated above, after the connection which was set up in accordance with the scenario of Fig. 7B has been taken down in the manner described in Fig. 9A, the connection set up in the scenario of Fig. 7A is next to be taken down. The basic events involved in the taking down of the connection established in the scenario of Fig. 7A are described in Fig. 9B. The events 9B-1 through 9B-15 illustrated in the scenario of Fig. 9B are analogous to events 9A-1 through 9A-15 of Fig. 9A, with a difference being that in Fig. 9B the particular user object 100 and connection object 102 that are involved in the connection tear down are associated with central processor 30₁-1 of node 20-1 rather than central processor 30₂-1 of node 20-1. Similarly, in Fig. 9B, the connection object 102 for data communications node 20-2 is associated with central processor 30₁-2 rather than central processor 30₂-2. This means that signaling link objects 112 in data communications node 20-1 and data communications node 20-2 distribute the incoming setup/response messages to central processors 30₁-1 and 30₁-2 in data communications nodes 20-1 and 20-2, respectively, rather than to central processors 30₂-1 and 30₂-2, respectively. The taking down of the connection ultimately results in elimination of the user plane connection, which is depicted by an crossing out (with an X) of connection 700A in Fig. 9B.

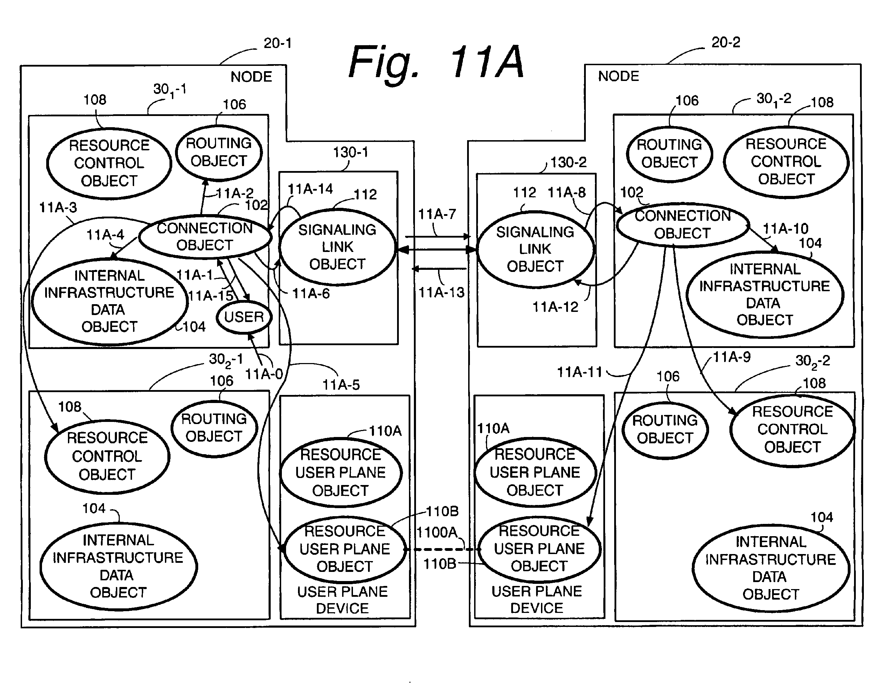

The nodes diagram of Fig. 11A and the flowchart of Fig. 8 together show another example scenario of connection setup. The sequence of events 11A-0 through 11A-15 are basically the same as the connection setup events 7A-0 through 7A-15, respectively, previously described with respect to Fig. 7A. However, in the connection setup scenario of Fig. 11A, the REC instance involved in the connection is located on another central processor, i.e., on central processor 30₂-1 of node 20-1 rather than central processor 30₁-1 of node 20-1. In this regard, event 11A-3 therefore shows connection object 102 of central processor 30₁-1 calling the resource control object (REC) 108 of central processor 30₂-1. Also, event 11A-5 shows connection object 102 calling the resource user plane (REUP) object 110B. If the REUP in data communications node 20-2 is also controlled by the second central processor 30₂-2, then correlative changes are observed for data communications node 20-2 also. In other words, as event 11A-9 the connection object 102 in central processor 30₁-2 calls resource control object (REC) 108, and as event 11A-11 the connection object 102 in central processor 30₁-2 calls resource user plane (REUP) object 110B. The resulting user plane connection is depicted by broken line 1100A in Fig. 11A. The control plane connection is established by central processor 30₁ and central processor 30₂ in both data communications node 20-1 and data communications node 20-2. The connection object 102 has stored object references to the user object 100 and to the reserved/activated resource in resource control object (REC) 108 and resource user plane (REUP) object 110B, respectively.

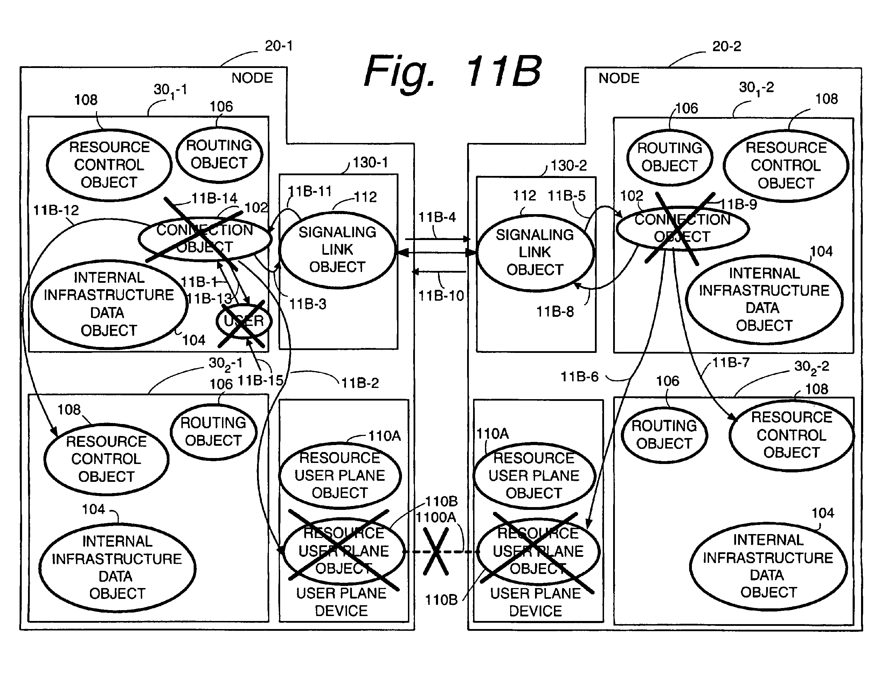

The tearing down of the connection established in Fig. 11A is depicted in Fig. 11B. The tear down events of Fig. 11B are essentially the same as those of Fig. 9B and Fig. 10 previously described, but taking into consideration that the resource control object (REC) 108 for the connection is located on central processor 30₂-1 rather than central processor 30₁-1. Therefore, consistent with Fig. 11A above described, event 11B-2 shows connection object 102 of central processor 30₁-1 calling resource user plane (REUP) object 110B, and event 11B-12 shows connection object 102 of central processor 30₁-1 calling the resource control object (REC) 108 of central processor 30₂-1. Correspondingly, in data communications node 20-2, as event 11B-6 the connection object 102 in central processor 30₁-2 calls resource user plane (REUP) object 110B, and as event 11B-7 the connection object 102 in central processor 30₁-2 calls resource control object (REC) 108 in central processor 30₂-2. Tear down of the connection is illustrated as a crossing out (X) of the user plane connection 1100A in Fig. 11B. As depicted by event 11B-15, the user object is deleted.

The predistributor 50 described above, which in any given node resides on the processor 130 and the signaling bearer object 112 executing thereon, is employed to distribute incoming Q.2630.1 message or link status indications from within the Q.2630.1 signaling bearer (e.g., SS7 or SAAL UNI) to the right recipient(s) within a node having central processor cluster (CPC) 32. As explained in more detail below with reference to an example embodiment, when a Q.2630.1 message is received from the signaling bearer, predistributor 50 analyzes the message and distributes it to one or several recipients.

### SIGNALING DISTRIBUTION

Fig. 12 generally illustrates aspects of an example signaling distribution model for one example embodiment. As explained previously, signaling distribution is applicable for network-wide connections. In Fig. 12, incoming messages to a node 20 are received on signaling bearer 200 (also known as the signaling link). In the illustrated example, signaling bearer 200 can use SS7 or UNI SAAL, SS7 of course referring to signaling system no. 7 (SS7). Fig. 12 also shows the signaling bearer object 112 which functions as predistributor 50. Since there can be plural access points (APs), e.g., a SAAL or an SS7 access point, connected to a node, each access point has its own signaling distributor instance on top of it.

As illustrated in previous embodiments, signaling bearer object 112 can be executed by a processor 130 of a data communications node 20. The signaling bearer object 112 serves, e.g., to distribute the incoming messages and link status indications to the right recipient(s). The recipients can include instances of connection control objects 202 (abbreviated "Conn Ctrl") and instances of REC SR objects 204.

The oval depicted as Conn Ctrl object 202 in Fig. 12 represents all connection object instances on a central processor. A ConnCtrl 202 object is comprised of AAL2 connection control software. The ConnCtrl 202 objects reside on, e.g., are distributed to, all central processors 30 in an AAL2 node, e.g., data communications node 20. AAL2 connection control uses establish and release messages to establish and release network wide AAL2 connections. AAL2 connection control is also dependent upon certain link status indications, such as congestion indications, out-of-service indications, and in-service indications. All connection-handling central processors 30 in central processor cluster (CPC) 32 receive the congestion indications, out-of-service indications, and in-service indications.

The ConnCtrl 202 object on a central processor 30 includes the instances of the connection objects 102 which are created and released upon respective initiation and termination of a corresponding connection. The signaling bearer object 112 distributes in-coming establish connection messages and release connection messages to the central processor 30 in data communications node 20 handling the actual connection instance involved. That is, the signaling bearer object 112 distributes incoming establish connection messages and release connection messages to the actual ConnCtrl instance 202.

Fig. 12 shows various types of messages and indications which are distributed to a typical ConnCtrl 202 object by signaling bearer object 112. Among the messages distributed to ConnCtrl 202 are the following: establish connection request message; establish connection confirmation message; release connection request message; release connection confirmation message; congestion indication; out-of-service indication; in-service indication; and confusion message.

Various messages distributed by signaling bearer object 112 deal with paths. The following messages can either relate to a CID, to a path, or to all paths in a signaling relation: block message; reset message; unblock message. Block and unblock messages can only relate to a path or all paths in a signaling relation, not to a unique CID.

To handle these path-pertinent messages, the REC SR object 204 and REC path object 206 are employed. The REC SR object 204 and REC path object 206 represent resource control (for SR and path, respectively).

The REC path object 206 represents an AAL2 path and handles Q.2630.1 signaling dealing with that path or with unique CIDs within that path. The REC SR object 204 represents all AAL2 paths in a signaling relation and handles Q.2630.1 signaling dealing with the whole signaling relation. A REC SR object 204 comprises one or more REC path objects 206.

The resource control of AAL2 paths is dependent upon congestion indications, out-of-service indications; and in-service indications. Congestion, out-of-service indications; and in-service indications are distributed to all instances of REC SR objects 204 and to all instances of REC path objects 206.

Fig. 12 thus also shows various types of message and indications which are distributed to instances of REC SR objects 204 and instances of REC path objects 206. Among the messages and indications so distributed are the following: block request message; block confirm message; unblock request message; unblock confirm message; reset request message; reset confirm message; congestion indication; out-of-service indication; in-service indication; and confusion message.

Confusion messages are distributed to the instance of ConnCtrl 202 object, or the instance of the REC SR object 204, or the instance of the REC path object 206 which is associated to the DSAI received in the confusion message.

The predistributor 50 of a node can, in accordance with the present invention, distribute incoming signaling messages in any of several different ways, depending on message type and depending on which information elements are included in or made available by the message. The distribution techniques can be based on any of the following techniques: loadsharing; DSAI, SUGR, signaling link identity; path identity, or broadcasting. Loadsharing is employed if there is no relevant information available for distribution criteria. DSAI (Destination Signaling Association Identifier) is used for connection-related messages and some path/signaling relation messages. SUGR (Served User Generated Reference) is used for connection-related messages. The signaling link identity is used if the message is directed to a REC SR object 204 instance or REC path object 206 instance. Path identity (part of CEID) together with a signaling link identity is used if the message is directed to an instance of a REC path object 206. When the appropriate path instance has been found, the message is routed to the right CID. If the message is directed to a specific CID, the distributor distributes the message to the right path instance. Broadcasting is used for information which is of interest to all recipients.

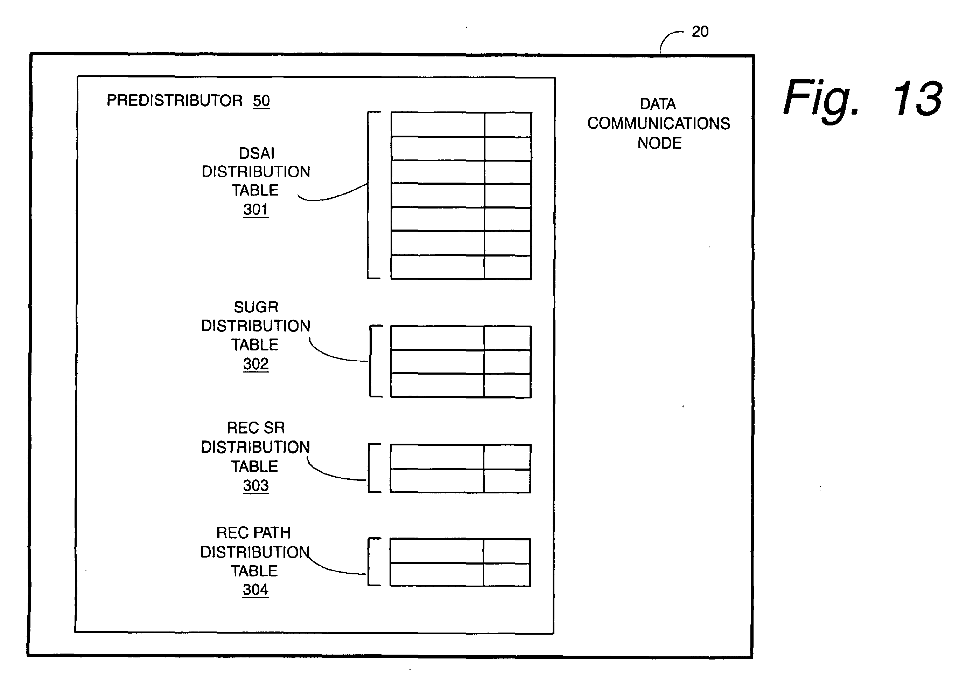

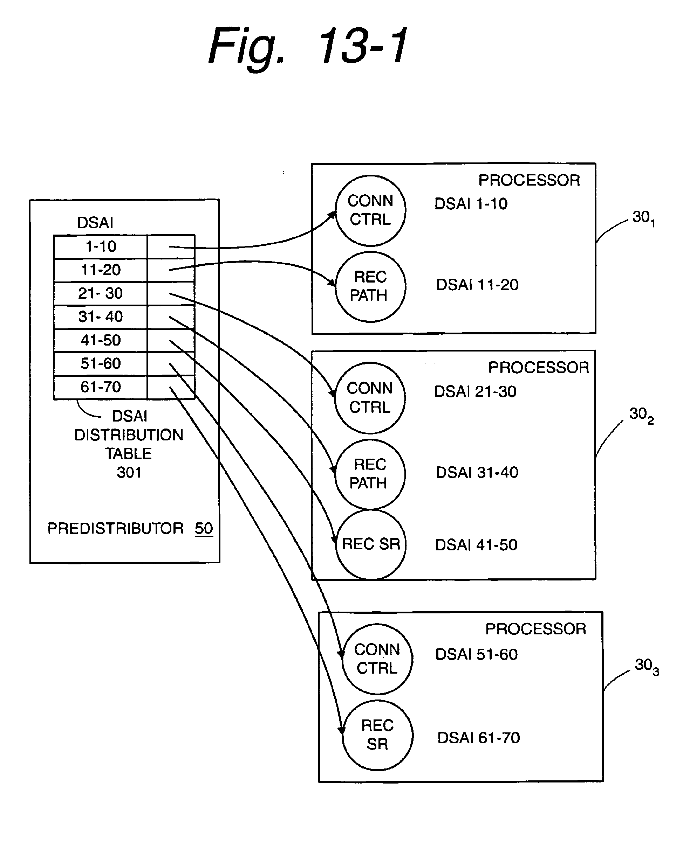

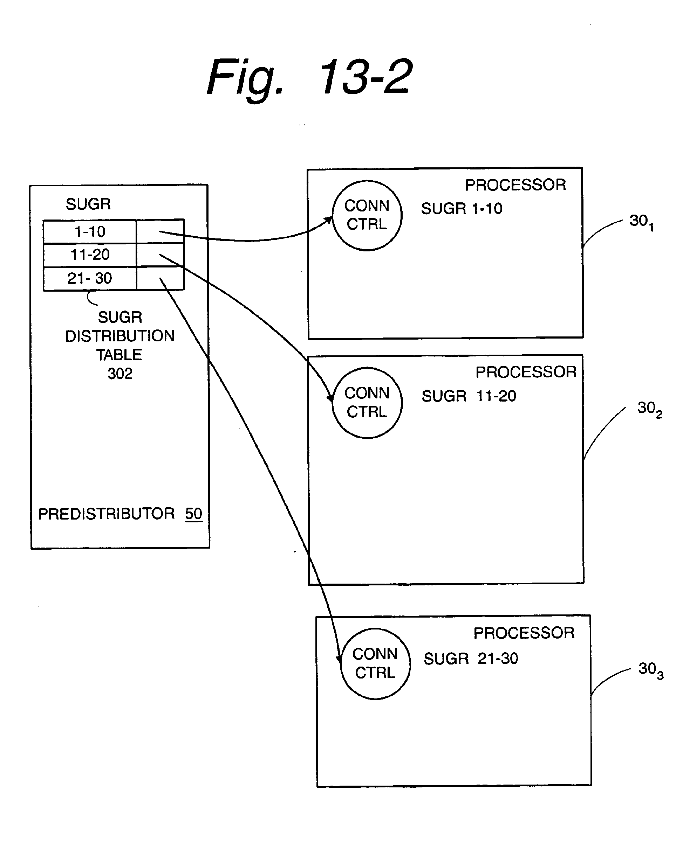

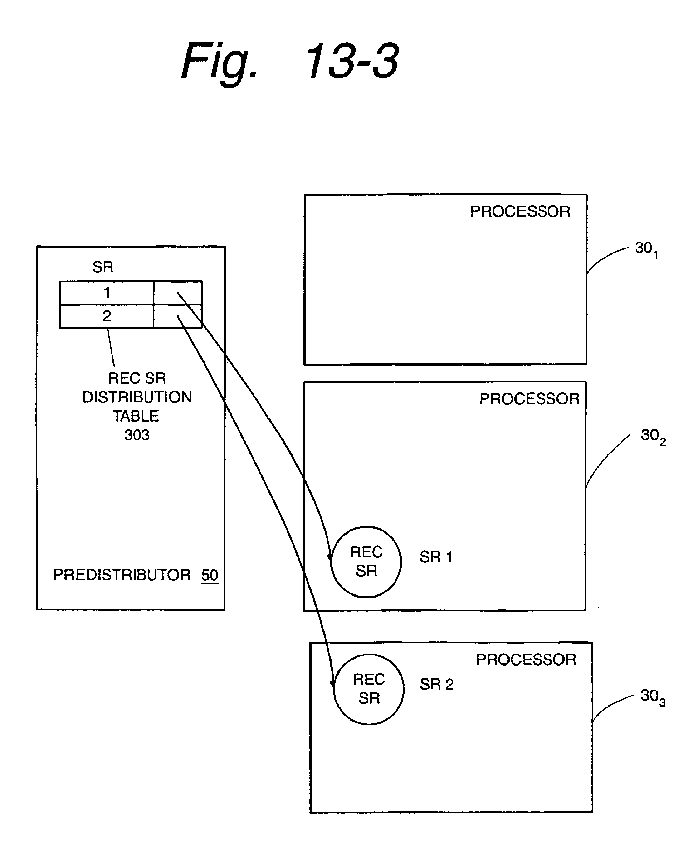

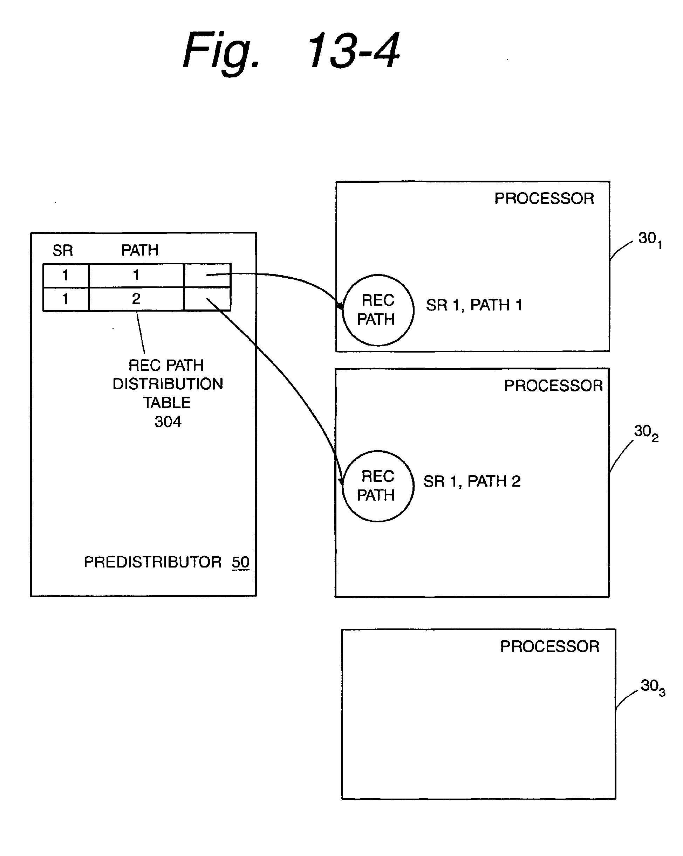

Fig. 13 shows four distribution tables 301, 302, 303, and 304 which comprised an example predistributor 50 in accordance with an embodiment of the invention. As shown generally in Fig. 13, these four tables are known as DSAI distribution table 301; SUGR distribution table 302; REC SR distribution table 303; and REC path distribution table 304. The respective distribution tables 301, 302, 303, and 304 are described in more detail in conjunction with Fig. 13-1; Fig. 13-2; Fig. 13-3; and Fig. 13-4, respectively. In illustrating the four distribution tables, it is presumed that an example node has three central processors 30 (unlike some of the previous example embodiments in which only two central processors 30 were illustrated).

The DSAI distribution table 301, shown in more detail in Fig. 13-1, has information about which instances of ConnCtrl 202, REC SR object 204, and REC path object 206 are associated with certain ranges of DSAI values. Each instance of ConnCtrl 202; REC SR object 204, and REC path object 206 has its own unique DSAI partition. For confusion messages, DSAI distribution table 301 is employed for distribution.

The SUGR distribution table 302, illustrated in Fig. 13-2, has information about which instances of ConnCtrl objects 202 are associated to which SUGR ranges. Each ConnCtrl instance has its own unique SUGR partition.

The REC SR distribution table 303 has information about the location of instances of REC SR objects 204. Similarly, the REC path distribution table 304 has information about the location of instances of REC path objects 206.

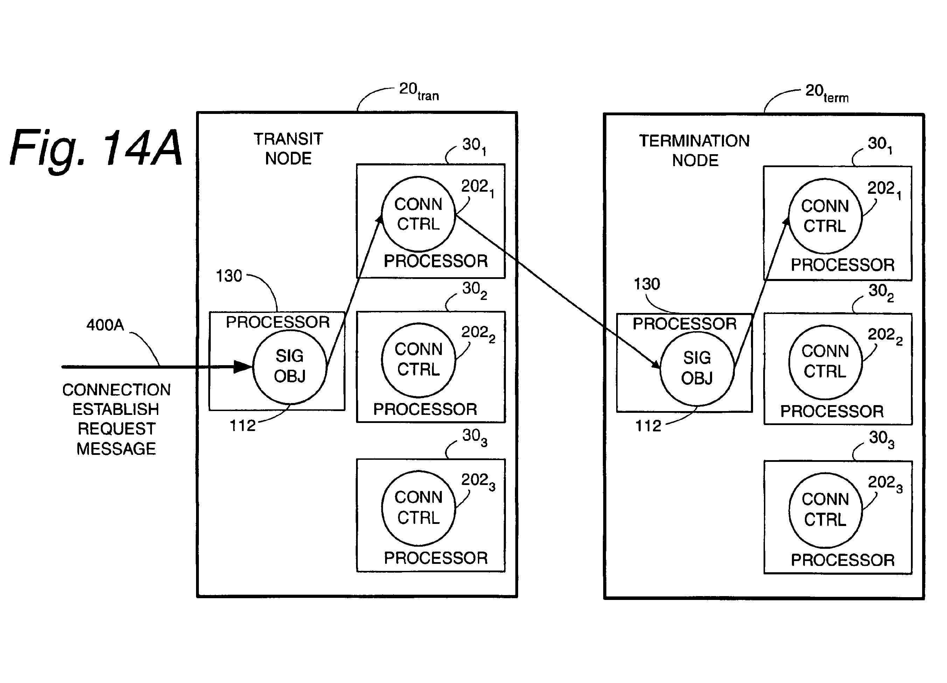

Having now described the four distribution tables of an example predistributor 50, the functionality of predistributor 50 is illustrated with reference to scenarios depicted in Fig. 14A - Fig. 14F.

Fig. 14A shows distribution of a connection establish request message 400A in both a transit node 20ₜᵣₐₙ and in a termination node 20ₜₑᵣₘ. The connection establish request message 400A can be distributed differently in the transit node 20ₜᵣₐₙ than in the termination node 20ₜₑᵣₘ. In a transit node 20ₜᵣₐₙ, the connection establish request message 400A is load shared among the central processors 30 having connection control functionality. In a termination node 20ₜₑᵣₘ, on the other hand, the SUGR (Served User Generated Reference) can be used for the distribution if it has a relevant value. The predistributor 50 in the termination node 20ₜₑᵣₘ analyzes the SUGR and distributes the message to the appropriate ConnCtrl instance 202 in accordance with the SUGR value (for example central processor 30₁ in Fig. 14A). If the SUGR does not have a relevant value, loadsharing is employed for distribution in the termination node 20ₜₑᵣₘ.

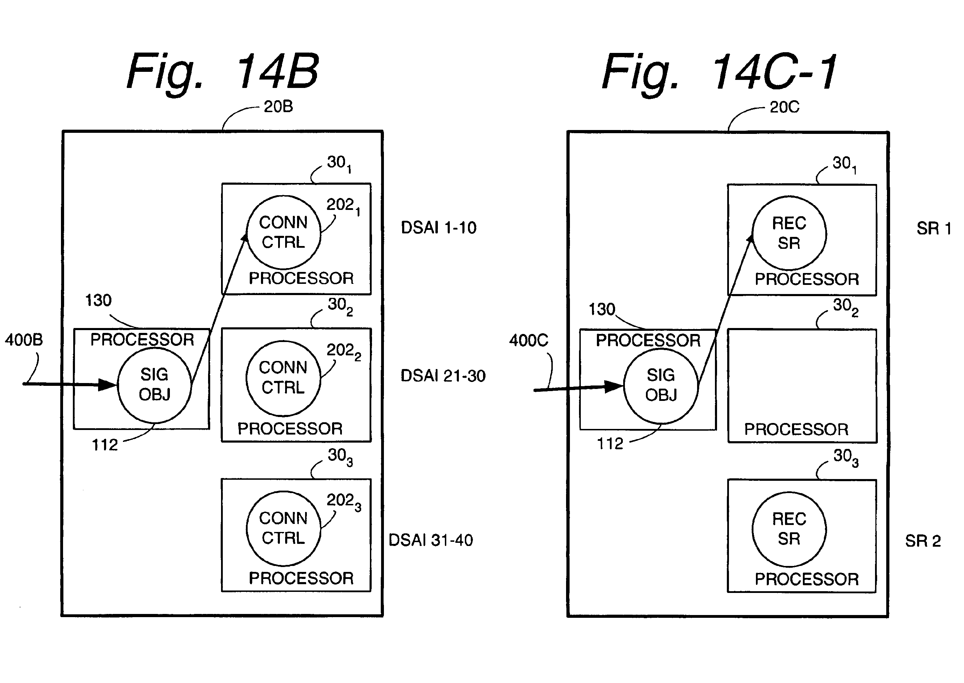

Fig. 14B shows distribution of a message 400B in any node, such as representative node 20B. The message 400B can be any of the following messages: connection establish confirmation message; connection release request message; connection release confirm message. The message 400B is distributed in the same way in any node. A DSAI (Destination Signaling Association Identifier) is used by predistributor 50 for the distribution. The predistributor 50 (in processor 130) analyzes the DSAI and distributes the message to the right ConnCtrl instance 202 (e.g., ConnCtrol instance 202, in central processor 30₁ in Fig. 14B).

Fig. 14C-1 and Fig. 14C-2 show distribution of a message 400C in any node, such as representative node 20C. The message 400C can be any of the following messages: reset request message; block request message; unblock request message. The Q.2630.1 signaling link identity is used for the distribution to the right instance of a resource control object (REC) 108. The CEID is received in the Q.2630.1 message and the signaling link identity is implicitly given by the signaling link of the incoming message.

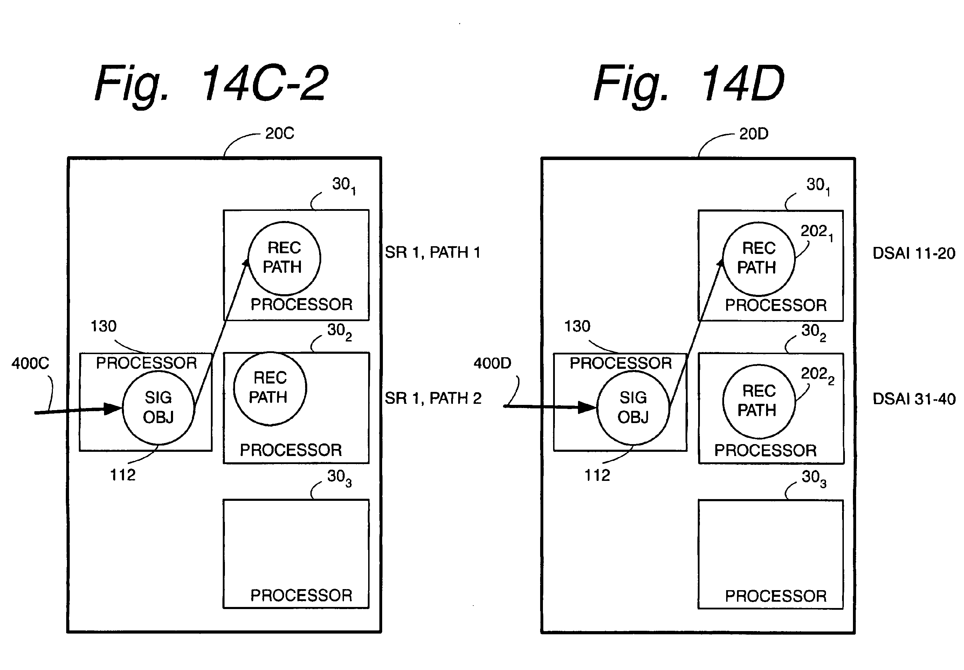

Depending on the scope of message 400C, the distribution can be accomplished in different ways. For example, if the scope of the message is "whole signaling relation", there is no information in the incoming message which can be used by predistributor 50 for distribution. Therefore, the message is distributed to the actual REC SR instance (e.g., instance of REC SR object 204) using the signaling link identity, as shown in Fig. 14C-1. On the other hand, if the scope of message 400C is "path" or "CID", the signaling link identity together with the received path identify are used for the distribution. The message is distributed to the REC SR instance (e.g., instance of REC path object 206) for the actual path, as shown in Fig. 14C-2.

Fig. 14D shows distribution of a message 400D in any node, such as representative node 20D. The message 400D can be any of the following messages: reset confirm message; block confirm message; unblock confirm message. The message 400D is distributed in the same way in any node. A DSAI (Destination Signaling Association Identifier) is used by predistributor 50 for the distribution. The predistributor 50 (in processor 130) analyzes the DSAI and distributes the message to the right REC path or REC SR. Fig. 14D shows an example of an incoming message 400D concerning one path.

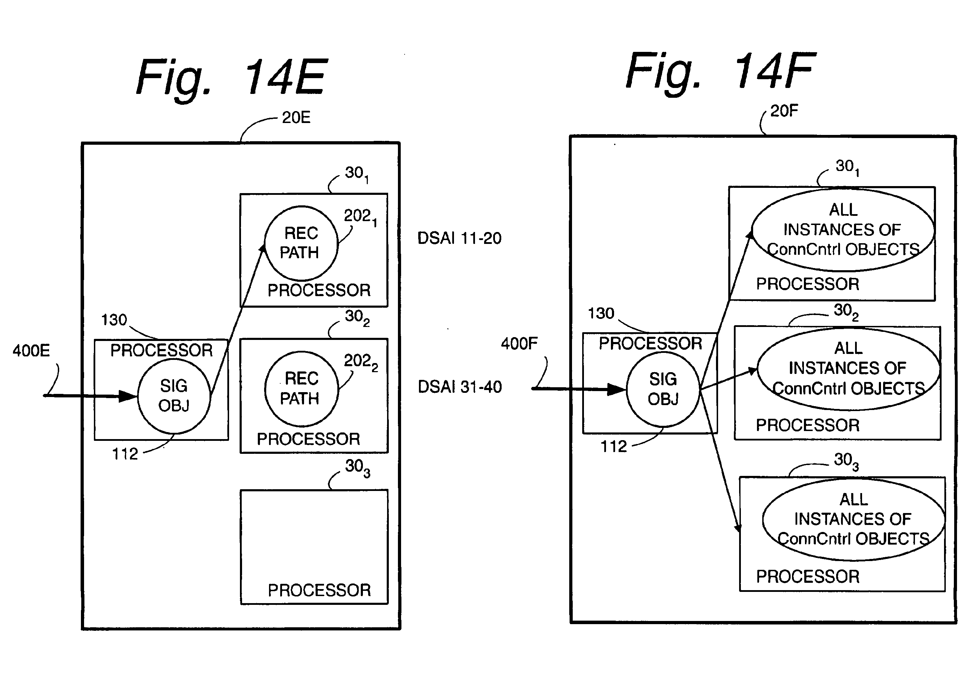

Fig. 14E shows distribution of a confusion message 400E in any node, such as representative node 20E. The confusion message 400E is distributed in the same way in any node. A DSAI (Destination Signaling Association Identifier) is used by predistributor 50 for the distribution. The predistributor 50 (in processor 130) analyzes the DSAI and distributes the message to the right recipient, e.g., to the ConnCtrl instance 202, to the right REC path, or to the right REC SR. Fig. 14E shows an example of an incoming confusion 400E with an DSAI associated to a path instance.

Fig. 14F shows distribution of a link status indication 400F in any node, such as representative node 20F. The link status indication 400F can be any of the following: in-service indication; out-of-service indication; congestion indication. The link status indication 400F from the signaling bearer is broadcast to all instances of ConnCtrl objects.

### PARTITIONING OF RESOURCE CONTROL

As previously mentioned, in the present invention the resource handling data (RHD), and hence the resource control of a node, is partitioned between plural central processors 30 of central processor cluster (CPC) 32. The resources of a node, which are controlled by the partitioned resource control, can include end system(s) (ES) and links, for example. An example of an end systems is a special purpose processor.

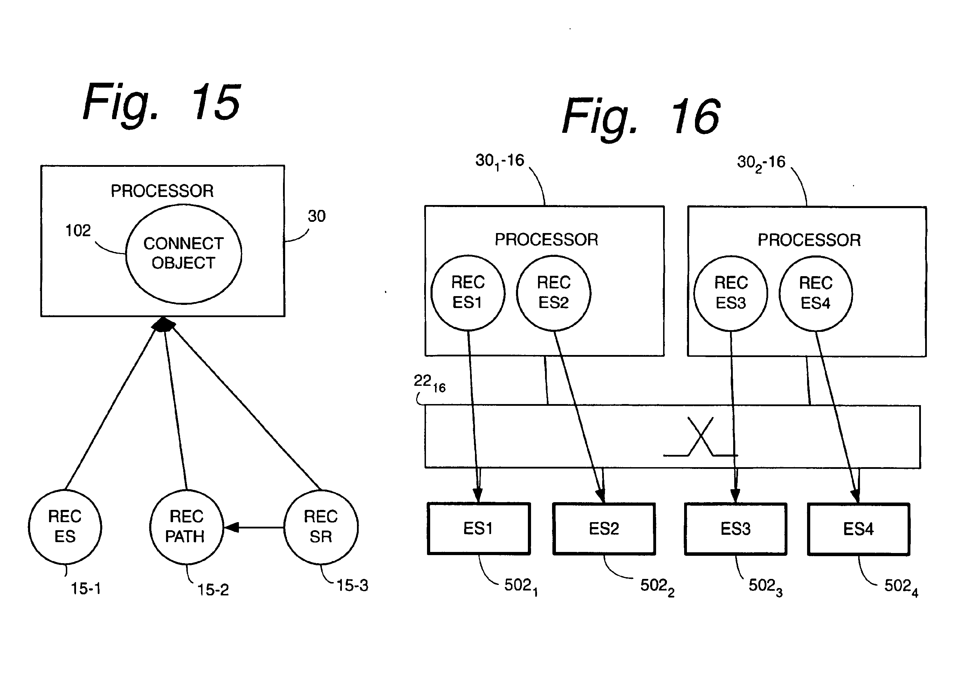

Resource control involves instances of resource control objects (REC) 108, e.g., REC instances, as previously described. Fig. 15 illustrates a basic resource control distribution model, showing three types of REC instances. The three types of REC instances include a REC ES instance 15-1 (for an end system resource); a REC instance, also known as a REC path instance 15-2; and a REC SR (signaling relation) instance 15-3. Each end system is controlled by a resource control for end system (REC ES) instance.

The REC instances are, in accordance with the present invention, partitioned so that, in most cases, the REC instances are allocated on the same central processor 30 as the connection instances (e.g., instances of connection object 102) using them. For example, Fig. 15 shows the REC instances 15-1 through 15-3 all being allocated to a central processor 30, with central processor 30 being the processor which executes a connection object 102 which uses the REC instances 15-1 through 15-3. Partitioning REC instances to processors 30 in accordance with the connection instances using them advantageously minimizes the amount of inter-processor communication.

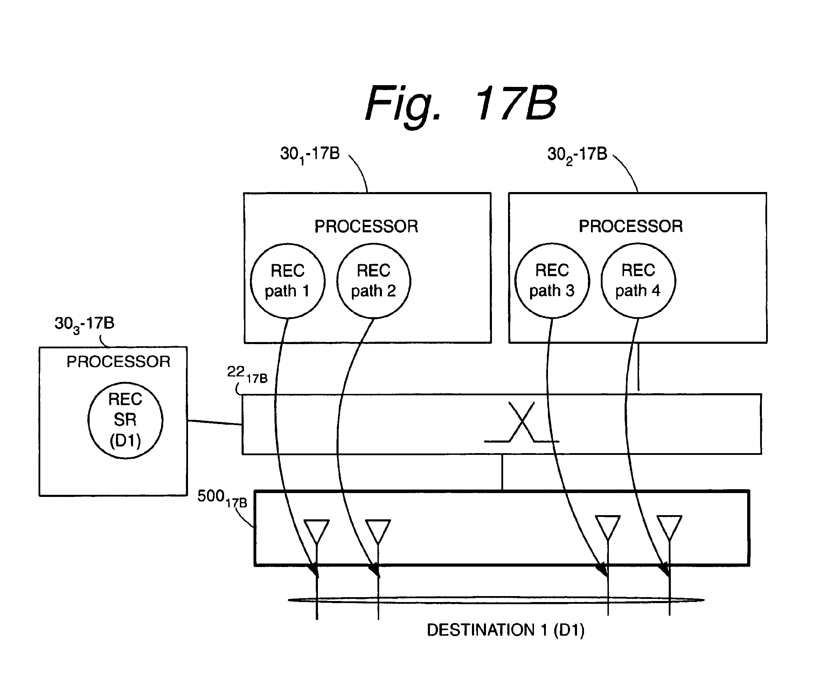

Alternatively, if a resource is controlled by several REC instances on different central processors 30 of a node, a REC instance is selected on the same processor 30 where the instance of the connection object 102 resides, if possible. For example, in Fig. 17B, resource 500_{17B} is controlled by several REC instances, two of which are executed by processor 30₁-17B and two of which are executed by processor 30₂-17B. Typically, the amount of REC instances on a processor 30 is configured to match the traffic load on that processor.

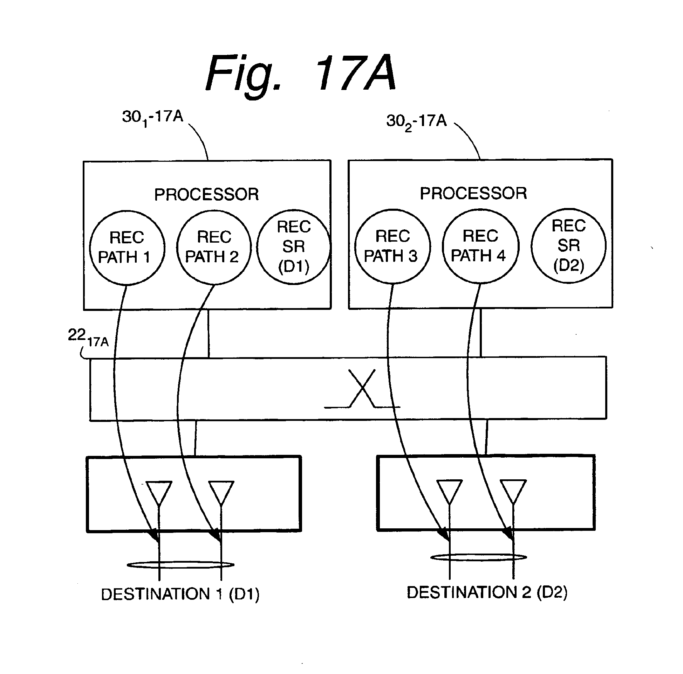

If a large resource (e.g., all paths in the signaling relation of Fig. 17B) is controlled by several REC instance on different central processors, this large resource can be divided into small resources (paths), where each path corresponds to one of the REC instances mentioned above. This means that all paths in a signaling relation are not controlled by the same central processor, which differs from the situation shown in Fig. 17A were all paths in a signaling relation are controlled by the same central processor.

In general, the REC instances and the relationship between processors 30 and the specification as to where the REC instances are to be distributed are established through configuration. Moreover, one REC instance is controlled by one and only one processor, although a processor can control several REC instances.

Fig. 16 shows an example node 20₁₆ having four end systems 502₁ - 502₄ connected to switch 22₁₆. In the cluster 32 of node 20₁₆, there are four REC ES instances for controlling the respective end systems 502₁ - 502₄. The REC ES instances are partitioned between processors 30₁-16 and 30₂-16, with processor 30₁-16 holding the REC ES instances for end systems 502₁ and 502₂ and with processor 30₂-16 holding the REC ES instances for end systems 502₃ and 502₄.

For link resources connected to adjacent nodes, there are two REC types. A first of these REC types is the resource control entity for a signaling relation (REC SR), described earlier. The resource control entity for a signaling relation (REC SR) comprises a number resource control entities for paths (REC path).

For link resources there are two cases of controlling these two types of resources. A first case occurs when a processor 30 controls the link itself, and no other processor needs to control the link in question. In this case, illustrated in Fig. 17A, the REC SR (signaling relation) is allocated on one processor (e.g., processor 30₁-17A) with all its related REC paths. Fig. 17A shows an example with four REC path instances controlling paths toward two destinations, e.g., destination 1 and destination 2. The REC instances are partitioned between processor 30₁-17A and processor 30₂-17A, with processor 30₁-17A holding the REC path instances toward destination 1 while processor 30₂-17A holds the REC path instances toward destination 2. Accordingly, the REC SR for destination 1 is also held by processor 30₁-17A. A similar situation exists at processor 30₂-17A with respect to the REC path instances and REC SR instance for destination 2.

A second example case of controlling link resources is illustrated in Fig. 17B. This second case involves a link to adjacent nodes with high capacity, upon which is concentrated traffic originating from lower rate links. This high capacity link needs to be controlled from several processors, such as processors 30₁-17B and 30₂-17B in Fig. 17B. In this second case, each processor 30 has its own REC path instances controlling a partition of the link. All REC path instances belong to the same REC SR instance, which is allocated to processor 30₃-17B. Fig. 17B thus shows an example with four REC path instances controlling paths toward the same destination. The REC instances are partitioned between processors 30₁-17B and 30₂-17B in the way that these processor control the paths.

The distribution of the REC SR objects on central processors in the manner of Fig. 17A and Fig. 17B are only illustrative representative examples. Other variations are also envisioned.

Extensions to the above-described resource control partitioning are also within the scope of the present invention. For example, if a resource is controlled by several REC instances on different processors of a node (e.g., the link to the destination in Fig. 17B), it may be difficult to predict the actual traffic load for each processor during configuration. This means that the amount of REC instances needed for connection on a specific processor can vary as time changes. In such a situation, it would be preferably to be able to use the REC instances in a flexible way depending on the traffic load situation.

Two considerations are posited for implementing such flexibility. A first occurs when there are no available resources in the REC instances on the "local processor", i.e., the processor where the connection instance resides. A first consideration is that connection instances can use the REC instances on other processors. This would be preferable for traffic models where changes in traffic load are quite short lived, since it increases the amount of inter-processor communication for each connection.

As a second consideration, an appropriate mechanism can be implemented for reallocation of REC instances between processors at traffic load changes. This consideration/solution is preferred for traffic models where the changes in traffic load are rather durable, since the amount of inter-processor communication for each connection is less than for the first consideration described above.

Various aspects of ATM-based telecommunications, including an example ATM switch suitable for use as switch 22, are explained in the following: U.S. Patents US 648 3831, US 6747954 and US 6804246.

As understood from the foregoing, the present invention is not limited to an ATM switch-based telecommunications platform, but can be implemented with other types of platforms. Moreover, the invention can be utilized with single or multiple stage platforms. Aspects of multi-staged platforms are described in U.S. Patent US 6480492 and U.S. Patent US 6449275.

While the invention has been described in connection with what is presently considered to be the most practical and preferred embodiment, it is to be understood that the invention is not to be limited to the disclosed embodiment.

## Claims

1. A node (20) of a data communications network having a connection handling functionality, **characterized in that** the connection handling functionality (26) is distributed among plural processors (30) of a processor cluster (32) in accordance with the following:
(1) infrastructure data (42) for the connection handling functionality (26) is distributed among the plural processors (30) of the processor cluster (32);
(2) resource handling data (44) is partitioned among the plural processors (30) of the processor cluster (32); and
(3) connection data (46) is created on a selected processor of the processor cluster (32) when an on demand connection is established at the selected processor.

2. The apparatus of claim 1, wherein the processor cluster (32) includes a predistributor (50/112) which is arranged to route incoming signaling messages to an appropriate processor of the processor cluster (32).

3. The apparatus of claim 1, further comprising an administrator processor which is arranged to distribute the infrastructure data (42) among the plural processors (30) of the processor cluster (32), wherein resource handling data (44) is partitioned among the plural processors (30) of the processor cluster (32), and wherein connection data (46) is created on a selected processor of the processor cluster (32) when an on demand connection is established at the selected processor.

4. The apparatus of claim 1, arranged to, when a connection is to be set up to another node, establish an instance of a connection object (102) in a selected one of the processors of the cluster (32); wherein the connection object (102) both reserves and activates resources of the node (20); wherein the connection object (102) reserves a resource of the node (20) by communicating with an instance of a resource control object (108) executed by a processor of the cluster (32); wherein the connection object (102) determines which instance of the resource control object (108) with which to communicate by communicating with a routing object (106) executed by a processor of the cluster (32); and, wherein the connection object (102) activates a resource of the node (20) by communicating with an instance of a resource user plane object (110) executed by a processor of the cluster (32).

5. The apparatus of claim 4, arranged to execute the instance of the resource control object (108) or the instance of the resource user plane object (110) by a different processor than the processor which executes the connection object (102).

6. The apparatus of claim 4, wherein in setting up the connection to the another node, the connection object (102) uses a signaling object (112) to send a connection establish signaling message to the another node.

7. The apparatus of claim 2, wherein for a path incoming to the node (20) the processor cluster (32) has an instance of a resource control path object (206) executed by one of the processors of the cluster (32), and wherein the instance of the resource control path object (206) is adapted to handle signaling for the path or for a unique connection identifier within the path, and wherein the predistributor (50/112) is adapted to distribute certain signaling messages or indications concerning the path to the instance of the resource control path object (206).

8. The apparatus of claim 2, further comprising an instance of a resource control signaling relation object (204) representing plural paths having a signaling relation, and wherein the predistributor (50/112) is arranged to distribute certain signaling messages or indications concerning the signaling relation path to the instance of the resource control signaling relation object (204).

9. The apparatus of claim 2, wherein the predistributor (50/112) comprises at least one distribution table which is used for routing the incoming signaling message, and wherein the distribution table which uses at least one of the following for routing the incoming signaling message: destination signaling association identifier (DSAI); served user generated reference (SUGR); signaling link identity; path identity.

10. The apparatus of claim 1, wherein the node (20) has plural end resources and plural instances of end resource control objects (108) corresponding to the plural end resources of the node (20), and wherein the plural instances of end resource control objects (108) are partitioned among the plural processors (30) of the processor cluster (32).

11. The apparatus of claim 1, wherein the node (20) has plural link resources; wherein control of the plural link resources units is partitioned among the plural processors (30) of the processor cluster (32); wherein for each of the plural link resources there is a path incoming to the node (20); wherein the processor cluster (32) has an instance of a resource control path object (206) executed by one of the processors of the cluster (32); and wherein the instance of the resource control path object (206) handle signaling for the path or for a unique connection identifier within the path.

12. The apparatus of claim 11, further comprising an instance of a resource control signaling relation object (204) representing plural paths having a signaling relation.

13. A method of operating a node (20) of a data communications network having a connection handling functionality, **characterized by** distributing the connection handling functionality (26) among plural processors (30) of a processor cluster (32); and by performing the following steps at the node (20):
(1) distributing infrastructure data (42) for the connection handling functionality (26) among the plural processors (30) of the processor cluster (32);
(2) partitioning resource handling data (44) among the plural processors (30) of the processor cluster (32); and
(3) creating connection data (46) on a selected processor of the processor cluster (32) when an on demand connection is established at the selected processor.

14. The method of claim 13, further comprising partitioning resource handling data (44) among the plural processors (30) of the processor cluster (32).

15. The method of claim 13, wherein, when a connection is to be set up to another node (20), the method further comprises performing the steps of:
establishing an instance of a connection object (102) in a selected one of the processors of the cluster (32);
using the connection object (102) to both reserve and activate resources of the node (20);
reserving a resource of the node (20) by communicating with an instance of a resource control object (108) executed by a processor of the cluster (32);
determining which instance of a link resource control object (108) with which to communicate by communicating with a routing object (106) executed by a processor of the cluster (32); and,
activating a resource of the node (20) by communicating with an instance of a resource user plane object (110) executed by a processor of the cluster (32).

16. The method of claim 15, further comprising executing the instance of the resource control object (108) or the instance of the resource user plane object (110) at a different processor than the processor which executes the connection object (102).

17. The method of claim 15, further comprising the connection object (102) using a signaling object (112) to send a connection establish signaling message to the another node in setting up the connection to the another node.

18. The method of claim 13, wherein , the node (20) has a signaling link connected thereto; the method further comprising using a predistributor (50/112) for the plural signaling link to route incoming signaling messages to an appropriate processor of the processor cluster (32).

19. The method of claim 18, wherein for a path incoming to the node (20) the processor cluster (32) has an instance of a resource control path object (206) executed by one of the processors of the cluster (32), and wherein the instance of the resource control path object (206) handles signaling for the path or for a unique connection identifier within the path, and further comprising the predistributor (50/112) distributing certain signaling messages or indications concerning the path to the instance of the resource control path object (206).

20. The method of claim 19, further comprising an instance of a resource control signaling relation object (204) representing plural paths having a signaling relation, and wherein the predistributor (50/112) distributes certain signaling messages or indications concerning the signaling relation path to the instance of the resource control signaling relation object (204).

21. The method of claim 13, wherein the resources include plural end resources and plural instances of end resource control objects (108) corresponding to the plural end resources of the node (20), and wherein the method further comprises partitioning the plural instances of end resource control objects (108) among the plural processors (30) of the processor cluster (32).

## Patentansprüche

1. Knoten (20) eines Daten-Kommunikationsnetzwerks mit einer Verbindungshandhabungs-Funktionalität, **dadurch gekennzeichnet, dass** die Verbindungshandhabungs-Funktionalität (26) zwischen mehreren Prozessoren (30) eines Prozessorclusters (32) gemäß dem Folgenden verteilt ist:
(1) Infrastrukturdaten (42) für die Verbindungshandhabungs-Funktionalität (26) sind verteilt zwischen den mehreren Prozessoren (30) des Prozessorclusters (32);
(2) Ressourcen-Handhabungsdaten (44) sind aufgeteilt zwischen den mehreren Prozessoren (30) des Prozessorclusters (32); und
(3) Verbindungsdaten (46) werden von einem gewählten Prozessor des Prozessorclusters (32) erzeugt, wenn eine Verbindung auf Anforderung bei dem gewählten Prozessor aufgebaut wird.

2. Gerät nach Anspruch 1, wobei der Prozessorcluster (32) einen Vorverteiler (50/112) beinhaltet, welcher eingerichtet ist, eingehende Signalisierungsnachrichten an einen geeigneten Prozessor des Prozessorclusters (32) zu routen.

3. Gerät nach Anspruch 1, welches ferner einen Administratorprozessor umfasst, welcher eingerichtet ist, die Infrastrukturdaten (42) zwischen den mehreren Prozessoren (30) des Prozessorclusters (32) zu verteilen, wobei Ressourcen-Handhabungsdaten (44) zwischen den mehreren Prozessoren (30) des Prozessorclusters (32) aufgeteilt werden, und wobei Verbindungsdaten (46) auf einem gewählten Prozessor des Prozessorclusters (32) erzeugt werden, wenn eine Verbindung auf Anforderung bei dem gewählten Prozessor aufgebaut wird.

4. Gerät nach Anspruch 1, welches eingerichtet ist, wenn eine Verbindung zu einem weiteren Knoten errichtet werden soll, eine Instanz eines Verbindungsobjekts (102) aufzubauen, in einem gewählten der Prozessoren des Clusters (32); wobei das Verbindungsobjekt (102) Ressourcen des Knotens (20) sowohl reserviert wie auch aktiviert; wobei das Verbindungsobjekt (102) eine Ressource des Knotens (20) durch Kommunizieren mit einer Instanz eines Ressourcen-Steuerungsobjekts (108) reserviert, welches von einem Prozessor des Clusters (32) ausgeführt wird; wobei das Verbindungsobjekt (102) bestimmt, welche Instanz des Ressourcen-Steuerungsobjekts (108), mit welcher kommuniziert wird, durch Kommunizieren mit einem Routing-Objekt (106), welches von einem Prozessor des Clusters (32) ausgeführt wird; und, wobei das Verbindungsobjekt (102) eine Ressource des Knotens (20) aktiviert, durch Kommunizieren mit einer Instanz eines Ressourcen-Benutzerebenenobjekts (110), welches von einem Prozessor des Clusters (32) ausgeführt wird.

5. Gerät nach Anspruch 4, welches eingerichtet ist, die Instanz des Ressourcen-Steuerungsobjekts (108) oder die Instanz des Ressourcen-Benutzerebenenobjekts (110) durch einen anderen Prozessor auszuführen als dem Prozessor, welcher das Verbindungsobjekt (102) ausführt.

6. Gerät nach Anspruch 4, wobei beim Errichten der Verbindung zu dem weiteren Knoten, das Verbindungsobjekt (102) ein Signalisierungsobjekt (112) nutzt, um eine Verbindungsaufbau-Signalisierungsnachricht zu dem weiteren Knoten zu senden.

7. Gerät nach Anspruch 2, wobei für einen Pfad, welcher an dem Knoten (20) eingeht, der Prozessorcluster (32) eine Instanz eines Ressourcen-Steuerungspfadobjekts (206) von einem der Prozessoren des Clusters (32) ausführen lässt, und wobei die Instanz des Ressourcen-Steuerungspfadobjekts (206) angepasst ist, Signalisieren für den Pfad oder für einen eindeutigen Verbindungs-Identifikator innerhalb des Pfads zu handhaben, und wobei der Vorverteiler (50/112) angepasst ist, bestimmte Signalisierungsnachrichten oder Anzeigen betreffend den Pfad an die Instanz des Ressourcen-Steuerungspfadobjekts (206) zu verteilen.

8. Gerät nach Anspruch 2, welches ferner eine Instanz eines Ressourcen-Steuerungssignalisierungs-Relationsobjekts (204) umfasst, welches mehrere Pfade mit einer Signalisierungsrelation darstellt, und wobei der Vorverteiler (54/112) eingerichtet ist, bestimmte Signalisierungsnachrichten oder Anzeigen betreffend den Signalisierungsrelationspfad an die Instanz des Ressourcen-Steuerungssignalisierungs-Relationsobjekts (204) zu verteilen.

9. Gerät nach Anspruch 2, wobei der Vorverteiler (50/112) wenigstens eine Verteilungstabelle umfasst, welche genutzt wird, die eingehende Signalisierungsnachricht zu routen, und die Verteilungstabelle wenigstens eines aus den Folgenden zum Routen der eingehenden Signalisierungsnachricht nutzt: Ziel-Signalisierungs-Assoziations-Identifikator (DSAI); Bedienter-Nutzererzeugte-Referenz (SUGR); Signalisierungs-Link-Identität; Pfad-Identität.

10. Gerät nach Anspruch 1, wobei der Knoten (20) mehrere End-Ressourcen und mehrere Instanzen von End-Ressourcen-Steuerungsobjekten (108) hat, welche den mehreren End-Ressourcen des Knotens (20) entsprechen, und wobei die mehreren Instanzen von End-Ressourcen-Steuerungsobjekten (108) zwischen mehreren Prozessoren (30) des Prozessorclusters (32) aufgeteilt sind.

11. Gerät nach Anspruch 1, wobei der Knoten (20) mehrere Link-Ressourcen hat; wobei eine Steuerung der mehreren Link-Ressourceneinheiten zwischen den mehreren Prozessoren (30) des Prozessorclusters (32) aufgeteilt ist; wobei für jede der mehreren Link-Ressourcen es einen Pfad gibt, welcher zu dem Knoten (20) eingeht; wobei der Prozessorcluster (32) eine Instanz eines Ressourcen-Steuerungspfadobjekts (206) von einem aus den Prozessoren des Clusters (32) ausführen lässt; und wobei die Instanz des Ressourcen-Steuerungspfadobjekts (206) angepasst ist, Signalisierung für den Pfad oder für einen eindeutigen Verbindungs-Identifikator innerhalb des Pfads zu handhaben.

12. Gerät nach Anspruch 11, welches ferner eine Instanz eines Ressourcen-Steuerungssignalisierungs-Relationsobjekts (204) umfasst, welches mehrere Pfade mit einer Signalisierungsrelation darstellt.

13. Verfahren zum Betreiben eines Knotens (20) eines Daten-Kommunikationsnetzwerks mit einer Verbindungshandhabungsfunktionalität, welches **gekennzeichnet ist durch** Verteilen der Verbindungshandhabungsfunktionalität (26) zwischen mehreren Prozessoren (30) eines Prozessorclusters (32); und **durch** Durchführen der folgenden Schritte an dem Knoten (20):
(1) Verteilen von Infrastrukturdaten (42) für die Verbindungshandhabungs-Funktionalität (26) zwischen den mehreren Prozessoren (30) des Prozessorclusters (32);
(2) Aufteilen von Ressourcen-Handhabungsdaten (44) zwischen den mehreren Prozessoren (30) des Prozessorclusters (32); und
(3) Erzeugen von Verbindungsdaten (46) auf einem gewählten Prozessor des Prozessorclusters (32), wenn eine Verbindung auf Anforderung bei dem gewählten Prozessor aufgebaut wird.

14. Verfahren nach Anspruch 13, welches ferner ein Aufteilen von Ressourcenhandhabungsdaten (44) unter den mehreren Prozessoren (30) des Prozessorclusters (32) umfasst.

15. Verfahren nach Anspruch 13, wobei, wenn eine Verbindung zu einem anderen Knoten (20) errichtet werden soll, das Verfahren ferner ein Durchführen der Schritte umfasst:
Aufbauen einer Instanz eines Verbindungsobjekts (102) in einem Gewählten aus den Prozessoren des Clusters (32);
Nutzen des Verbindungsobjekts (102), um Ressourcen des Knotens (20) sowohl zu reservieren wie auch zu aktivieren;
Reservieren einer Ressource des Knotens (20) durch Kommunizieren mit einer Instanz eines Ressourcen-Steuerungsobjekts (108), welches von einem Prozessor des Clusters (32) ausgeführt wird;
Bestimmen, welche Instanz eines Link-Ressourcen-Steuerungsobjekts (108), mit welcher kommuniziert wird, durch Kommunizieren mit einem Routing-Objekt (106), welches von einem Prozessor des Clusters (230) ausgeführt wird; und
Aktivieren einer Ressource des Knotens (20) durch Kommunizieren mit einer Instanz eines Ressourcen-Benutzerebenenobjekts (110), welches von einem Prozessor des Clusters (32) ausgeführt wird.

16. Verfahren nach Anspruch 15, welches ferner ein Ausführen der Instanz des Ressourcen-Steuerungsobjekts (108) oder der Instanz des Ressourcen-Benutzerebenenobjekts (110) an einem anderen Prozessor umfasst, als dem Prozessor, welcher das Verbindungsobjekt (102) ausführt.

17. Verfahren nach Anspruch 15, welches ferner umfasst, dass das Verbindungsobjekt (102) ein Signalisierungsobjekt (112) nutzt, um eine Verbindungsaufbau-Signalisierungsnachricht zu dem weiteren Knoten beim Errichten der Verbindung zu dem weiteren Knoten zu senden.

18. Verfahren nach Anspruch 13, wobei der Knoten (20) mit einem Signalisierungs-Link verbunden ist;
wobei das Verfahren ferner ein Nutzen eines Vorverteilers (50/112) umfasst, für den mehreren Signalisierungs-Link, um eingehende Signalisierungsnachrichten an einen geeigneten Prozessor des Prozessorclusters (32) zu routen.

19. Verfahren nach Anspruch 18, wobei für einen Pfad, welcher an dem Knoten (20) eingeht, der Prozessorcluster (32) eine Instanz eines Ressourcen-Steuerungspfadobjekts (206) durch einen der Prozessoren des Clusters (32) ausführen lässt, und wobei die Instanz des Ressourcen-Steuerungspfadobjekts (206) Signalisierung für den Pfad oder für einen eindeutigen Verbindungsidentifikator innerhalb des Pfads handhabt, und welches ferner umfasst, dass der Vorverteiler (50/112) bestimmte Signalisierungsnachrichten oder Anzeigen betreffend den Pfad an die Instanz des Ressourcen-Steuerungspfadobjekts (206) verteilt.

20. Verfahren nach Anspruch 19, welches ferner umfasst, dass eine Instanz des Ressourcen-Steuerungssignalisierungs-Relationsobjekts (204) mehrere Pfade darstellt, welche eine Signalisierungsrelation haben, und wobei der Vorverteiler (50/112) bestimmte Signalisierungsnachrichten oder Anzeigen betreffend den Signalisierungs-Relationspfad an die Instanz des Ressourcen-Steuerungssignalisierungs-Relationsobjekts (204) verteilt.

21. Verfahren nach Anspruch 13, wobei die Ressourcen mehrere End-Ressourcen und mehrere Instanzen von End-Ressourcen-Steuerungsobjekten (108) beinhalten, welche den mehreren End-Ressourcen des Knotens (20) entsprechen, und wobei das Verfahren ferner ein Aufteilen der mehreren Instanzen von End-Ressourcen-Steuerungsobjekten (108) zwischen den mehreren Prozessoren (30) des Prozessorclusters (32) umfasst.

## Revendications

1. Noeud (20) d'un réseau de communications de données ayant une fonctionnalité de gestion de connexion, **caractérisé en ce que** la fonctionnalité de gestion de connexion (26) est distribuée parmi plusieurs processeurs (30) d'une grappe de processeurs (32) conformément à ce qui suit:
(1) données d'infrastructure (42) pour la fonctionnalité de gestion de connexion (26) sont distribuées parmi les nombreux processeurs (30) de la grappe de processeurs (32) ;
(2) données de gestion de ressource (44) sont divisées parmi les nombreux processeurs (30) de la grappe de processeurs (32) ; et
(3) données de connexion (46) sont créées sur un processeur sélectionné de la grappe de processeurs (32) lorsqu'une connexion à la demande est établie au niveau du processeur sélectionné.

2. Appareil de la revendication 1, dans lequel la grappe de processeurs (32) comporte un pré-distributeur (50/112) qui est agencé pour le routage des messages de signalisation entrants vers un processeur approprié de la grappe de processeurs (32).

3. Appareil de la revendication 1, comprenant en outre un processeur d'administrateur qui est agencé pour distribuer les données d'infrastructure (42) parmi les nombreux processeurs (30) de la grappe de processeur (32), où les données de gestion de ressource (44) sont divisées parmi les nombreux processeurs (30) de la grappe de processeurs (32), et où des données de connexion (46) sont créées sur un processeur sélectionné de la grappe de processeurs (32) lorsqu'une connexion à la demande est établie au niveau du processeur sélectionné.

4. Appareil de la revendication 1, agencé, lorsqu'une connexion doit être établie à un autre noeud, pour établir une instance d'un objet de connexion (102) dans un processeur sélectionné des processeurs (32) de la grappe (32); où l'objet de connexion (102) réserve et active à la fois des ressources du noeud (20) ; où l'objet de connexion (102) réserve une ressource du noeud (20) en communiquant avec une instance d'un objet de commande de ressource (108) exécuté par un processeur de la grappe (32) ; où l'objet de connexion (102) détermine l'instance de l'objet de commande de ressource (108) avec laquelle on doit communiquer en communiquant avec un objet de routage (106) exécuté par un processeur de la grappe (32) ; et, où l'objet de connexion (102) active une ressource du noeud (20) en communiquant avec une instance d'un objet de plan d'utilisateur de ressource (110) exécuté par un processeur de la grappe (32).

5. Appareil de la revendication 4, agencé pour exécuter l'instance de l'objet de commande de ressource (108) ou l'instance de l'objet de plan d'utilisateur de ressource (110) par un processeur différent du processeur qui exécute l'objet de connexion (102).

6. Appareil de la revendication 4, dans lequel, en établissant la connexion à un autre noeud, l'objet de connexion (102) utilise un objet de signalisation (112) pour envoyer un message de signalisation d'établissement de connexion à l'autre noeud.

7. Appareil de la revendication 2, dans lequel, pour un chemin entrant dans le noeud (20), la grappe de processeurs (32) a une instance d'un objet de chemin de commande de ressource (206) exécuté par l'un des processeurs de la grappe (32), et où l'instance de l'objet de chemin de commande de ressource (206) est adaptée pour gérer la signalisation pour le chemin ou pour un identificateur de connexion unique dans le chemin, et où le pré-distributeur (50/112) est adapté pour distribuer certain(e)s indications ou messages de signalisation concernant le chemin vers l'instance de l'objet de chemin de commande de ressource (206).

8. Appareil de la revendication 2, comprenant en outre une instance d'un objet de relation de signalisation de commande de ressource (204) représentant plusieurs chemins ayant une relation de signalisation, et où le pré-distributeur (50/112) est agencé pour distribuer certain(e)s indications ou messages de signalisation concernant le chemin de relation de signalisation vers l'instance de l'objet de relation de signalisation de commande de ressource (204).

9. Appareil de la revendication 2, dans lequel le pré-distributeur (50/112) comprend au moins une table de distribution qui est utilisée pour le routage du message de signalisation entrant, et où la table de distribution qui utilise au moins l'un de ce qui suit pour le routage du message de signalisation entrant: un identificateur d'association de signalisation de destination (DSAI) ; une référence générée par l'utilisateur desservi (SUGR) ; une identité de lien de signalisation ; une identité de chemin.

10. Appareil de la revendication 1, dans lequel le noeud (20) a plusieurs ressources de fin et plusieurs instances d'objets de commande de ressource de fin (108) correspondant aux nombreuses ressources de fin du noeud (20), et où les nombreuses instances d'objets de commande de ressource de fin (108) sont divisées parmi les nombreux processeurs (30) de la grappe de processeurs (32).

11. Appareil de la revendication 1, dans lequel le noeud (20) a plusieurs ressources de liaison ; où la commande des nombreuses unités de ressources de liaison est divisée parmi les nombreux processeurs (30) de la grappe de processeurs (32) ; où, pour chacune des nombreuses ressources de liaison, il existe un chemin entrant dans le noeud (20) ; où la grappe de processeurs (32) a une instance d'un objet de chemin de commande de ressource (206) exécuté par l'un des processeurs de la grappe (32) ; et où l'instance de l'objet de chemin de commande de ressource (206) est adaptée pour gérer la signalisation pour le chemin ou pour un identificateur de connexion unique dans le chemin.

12. Appareil de la revendication 11, comprenant en outre une instance d'un objet de relation de signalisation de commande de ressource (204) représentant plusieurs chemins ayant une relation de signalisation.

13. Procédé de fonctionnement d'un noeud (20) d'un réseau de communications de données ayant une fonctionnalité de gestion de connexion, **caractérisé par** le fait de distribuer la fonctionnalité de gestion de connexion (26) parmi plusieurs processeurs (30) de la grappe de processeurs (32) ; et d'exécuter les étapes suivantes au niveau du noeud (20) qui consistent :
(1) à distribuer des données d'infrastructure (42) pour la fonctionnalité de gestion de connexion (26) parmi les nombreux processeurs (30) de la grappe de processeurs (32) ;
(2) à diviser des données de gestion de ressource (44) entre les nombreux processeurs (30) de la grappe de processeurs (32) ; et
(3) à créer des données de connexion (46) sur un processeur sélectionné de la grappe de processeurs (32) lorsqu'une connexion à la demande est établie au niveau du processeur sélectionné.

14. Procédé de la revendication 13, comprenant en outre la division des données de gestion de ressource (44) parmi les nombreux processeurs (30) de la grappe de processeurs (32).

15. Procédé de la revendication 13, dans lequel, lorsqu'une connexion doit être établie à un autre noeud (20), le procédé comprend en outre l'exécution des étapes qui consistent :
à établir une instance d'un objet de connexion (102) dans un processeur sélectionné des processeurs de la grappe (32) ;
à utiliser l'objet de connexion (102) pour réserver et activer à la fois des ressources du noeud (20) ;
à réserver une ressource du noeud (20) en communiquant avec une instance d'un objet de commande de ressource (108) exécuté par un processeur de la grappe (32) ;
à déterminer l'instance d'un objet de commande de ressource de liaison (108) avec laquelle on doit communiquer en communiquant avec un objet de routage (106) exécuté par un processeur de la grappe (32) ; et,
à activer une ressource du noeud (20) en communiquant avec une instance d'un objet de plan d'utilisateur de ressource (110) exécuté par un processeur de la grappe (32).

16. Procédé de la revendication 15, comprenant en outre l'exécution de l'instance de l'objet de commande de ressource (108) ou l'instance de l'objet de plan d'utilisateur de ressource (110) au niveau d'un processeur différent du processeur qui exécute l'objet de connexion (102) .

17. Procédé de la revendication 15, comprenant en outre l'objet de connexion (102) en utilisant un objet de signalisation (112) pour envoyer un message de signalisation d'établissement de connexion à un autre noeud en établissant la connexion à l'autre noeud.

18. Procédé de la revendication 13, dans lequel le noeud (20) a une liaison de signalisation qui lui est connectée ;
le procédé comprenant en outre l'utilisation d'un pré-distributeur (50/112) pour les nombreuses liaisons de signalisation pour le routage des messages de signalisation entrants vers un processeur approprié de la grappe de processeurs (32).

19. Procédé de la revendication 18, dans lequel, pour un chemin entrant dans le noeud (20), la grappe de processeurs (32) a une instance d'un objet de chemin de commande de ressource (206) exécuté par l'un des processeurs de la grappe (32), et où l'instance de l'objet de chemin de commande de ressource (206) gère la signalisation pour le chemin ou pour un identificateur de connexion unique dans le chemin, et comprenant en outre le pré-distributeur (50/112) distribuant certain(e)s indications ou messages de signalisation concernant le chemin vers l'instance de l'objet de chemin de commande de ressource (206).

20. Procédé de la revendication 19, comprenant en outre une instance d'un objet de relation de signalisation de commande de ressource (204) représentant plusieurs chemins ayant une relation de signalisation, et où le pré-distributeur (50/112) distribue certain(e)s indications ou messages de signalisation concernant le chemin de relation de signalisation à l'instance de l'objet de relation de signalisation de commande de ressource (204).

21. Procédé de la revendication 13, dans lequel les ressources comportent de nombreuses ressources de fin et plusieurs instances d'objets de commande de ressource de fin (108) correspondant aux nombreuses ressources de fin du noeud (20), et où le procédé comprend en outre la division des nombreuses instances d'objets de commande de ressource de fin (108) parmi les nombreux processeurs (30) de la grappe de processeurs (32).
